# EUROPEAN PATENT APPLICATION

(11) **EP 4 835 034 A1**
(43) Date of publication of application: **04.11.2026**
(21) Application number: 24912914.9
(22) Date of filing: 25.12.2024
(51) Int. Cl.: C09K 3/14, C08F 291/02, C08L 51/04, C08L 61/04, F16D 13/62, F16D 69/02

(54) **NOISE REDUCTION AGENT, RESIN COMPOSITION FOR FRICTION MATERIAL, AND FRICTION MATERIAL**

(30) Priority: 27.12.2023 JP 2023221658
(71) Applicant: KANEKA CORPORATION, Osaka-shi, Osaka 530-8288 (JP)
(72) Inventor: MAIZURU, Nobuyoshi, Takasago-shi, Hyogo 676-8688 (JP)
(74) Representative: Vossius & Partner Patentanwälte Rechtsanwälte mbB
(86) International application number: PCT/JP2024/045923
(87) International publication number: WO 2025/143028

(57) **Abstract**

An object is to provide a novel noise reduction agent that is capable of providing a resin composition for a friction material which makes it possible to provide a friction material with reduced noise. Provided is a noise reduction agent containing fine polymer particles (A) having a specific peak top of tan δ or a noise reduction agent containing fine polymer particles (A) having a specific configuration and a specific volume-average particle size.

## Description

### Technical Field

The present invention relates to a noise reduction agent, a resin composition for a friction material, and a friction material.

### Background Art

Friction materials used for brake pads, clutches, and the like are produced by curing a thermosetting resin composition (resin composition for a friction material). As the resin composition for a friction material, resin compositions using a phenol-based resin as a binder are widely known. In addition, for friction materials used for brake pads, clutches, and the like, a technique of blending (adding) core-shell particles in order to enhance impact resistance and flexibility is known (for example, Patent Literature 1).

Further, a technique of blending (adding) a core-shell graft copolymer into, for example, a binder for a friction material such as a disk pad and a lining for a drum brake is also known (for example, Patent Literature 2).

### Citation List

### [Patent Literature]

[Patent Literature 1]
   Japanese Patent Application Publication Tokukai No. 2004-182845
[Patent Literature 2]
   International Publication No. WO 2018/105682

### Summary of Invention

### Technical Problem

However, the friction materials of the conventional art as described above had room for further improvement from the viewpoint that noise (brake squeal) caused by a braking operation is loud.

An embodiment of the present invention has been made in view of the above problem, and an object thereof is to provide a novel noise reduction agent that is capable of providing a resin composition for a friction material which makes it possible to provide a friction material with reduced noise.

### Solution to Problem

As a result of conducting diligent studies in order to attain the above object, the inventor of the present invention completed the present invention.

A noise reduction agent in accordance with an embodiment of the present invention is a noise reduction agent including fine polymer particles (A), wherein:
the fine polymer particles (A) include a core part and a graft part grafted to the core part;
the noise reduction agent has a peak top of tan δ in a temperature region of not lower than 10°C; and
a maximum value of a peak height of tan δ in the temperature region of not lower than 10°C is not less than 0.70.

A noise reduction agent in accordance with another embodiment of the present invention is a noise reduction agent including fine polymer particles (A), wherein:
the fine polymer particles (A) include a core part and a graft part grafted to the core part;
a proportion of the graft part in the fine polymer particles (A) is 20% by weight to 90% by weight in 100% by weight of the fine polymer particles (A); and
a proportion of the unsubstituted vinyl aromatic unit and/or the vinyl-substituted aromatic unit in the graft part is more than 70% by weight and not more than 100% by weight in 100% by weight of the graft part.

### Advantageous Effects of Invention

An embodiment of the present invention brings about an effect of enabling provision of a novel noise reduction agent that is capable of providing a resin composition for a friction material which makes it possible to provide a friction material with reduced noise.

### Description of Embodiments

An embodiment of the present invention will be described below, but the present invention is not limited thereto. The present invention is not limited to the configurations described below, but may be altered in various ways within the scope of the claims. The present invention also encompasses, in its technical scope, any embodiment or example derived by combining technical means disclosed in differing embodiments and examples. Further, it is possible to form a new technical feature by combining the technical means disclosed in differing embodiments. All academic and patent documents cited in the present specification are incorporated herein by reference. Further, any numerical range expressed as "A to B" in the present specification means "not less than A (A or more) and not more than B (B or less)" unless otherwise specified.

In the present specification, an "X unit" contained in a polymer, a copolymer, or a resin is intended to mean a "structural unit derived from an X monomer" or a "structural unit derived from an X compound". For example, a "styrene unit" is intended to mean a "structural unit derived from a styrene monomer".

In the present specification, the "noise reduction agent in accordance with an embodiment of the present invention" may also be referred to as "the present noise reduction agent". In the present specification, the "resin composition for a friction material" may also be referred to as "composition", and the "resin composition for a friction material in accordance with an embodiment of the present invention" may also be referred to as "the present composition". In the present specification, the "friction material in accordance with an embodiment of the present invention" is also referred to as "the present friction material".

### [1. Technical idea of an embodiment of the present invention]

As described above, conventionally, for friction materials used for brake pads, clutches, and the like, a technique of blending (adding) core-shell particles in order to enhance impact resistance and flexibility is known. However, the conventional art as described above had room for further improvement from the viewpoint that noise (brake squeal) caused by a braking operation is loud. Therefore, the inventor of the present invention conducted diligent studies for the purpose of providing a novel noise reduction agent that is capable of providing a resin composition for a friction material which makes it possible to provide a friction material with reduced noise.

As a result, the inventor of the present invention obtained, on his own, the following novel findings and completed the present invention:
(1) A noise reduction agent including fine polymer particles (A), wherein: the fine polymer particles (A) include a core part and a graft part grafted to the core part; the noise reduction agent has a peak top of tan δ in a temperature region of not lower than 10°C; and a maximum value of a peak height of tan δ in the temperature region of not lower than 10°C is not less than 0.70, is capable of providing a resin composition for a friction material which makes it possible to provide a friction material with reduced noise.
(2) A noise reduction agent including fine polymer particles (A), wherein: the fine polymer particles (A) include a core part and a graft part grafted to the core part; a proportion of the graft part is 20% by weight to 90% by weight in 100% by weight of the fine polymer particles (A); and a proportion of an unsubstituted vinyl aromatic unit and/or a vinyl-substituted aromatic unit in the graft part is more than 70% by weight and not more than 100% by weight in 100% by weight of the graft part, is capable of providing a resin composition for a friction material which makes it possible to provide a friction material with reduced noise.

### [2. Noise reduction agent]

A noise reduction agent in accordance with an embodiment of the present invention is a noise reduction agent including fine polymer particles (A), wherein the fine polymer particles (A) include a core part and a graft part grafted to the core part, the noise reduction agent has a peak top of tan δ in a temperature region of not lower than 10°C, and a maximum value of a peak height of tan δ in the temperature region of not lower than 10°C is not less than 0.70.

Alternatively, a noise reduction agent in accordance with another embodiment of the present invention is a noise reduction agent including fine polymer particles (A), wherein the fine polymer particles (A) include a core part and a graft part grafted to the core part, a proportion of the graft part in the fine polymer particles (A) is 20% by weight to 90% by weight in 100% by weight of the fine polymer particles (A), and a proportion of an unsubstituted vinyl aromatic unit and/or a vinyl-substituted aromatic unit in the graft part is more than 70% by weight and not more than 100% by weight in 100% by weight of the graft part.

Since the present noise reduction agent has the above configuration, the present noise reduction agent has high vibration absorption ability, and thus can provide a resin composition for a friction material capable of reducing noise.

It can also be said that the present noise reduction agent is a noise reduction agent for producing a resin composition for a friction material.

### (2-1. Fine polymer particles (A))

The fine polymer particles (A) include a core part and a graft part grafted to the core part.

### (2-1-1. Core part)

In an embodiment of the present invention, the core part preferably contains at least one type selected from the group consisting of diene-based rubbers, (meth)acrylate-based rubbers, and organosiloxane-based rubbers.

A case where the core part contains a diene-based rubber (Case A) will be described. In Case A, the resulting resin composition can provide a cured product having excellent toughness and excellent impact resistance. It can also be said that a cured product having excellent toughness and/or excellent impact resistance is a cured product having excellent durability.

The diene-based rubber is a core part containing, as a structural unit, a structural unit derived from a diene-based monomer. The diene-based monomer can also be rephrased as a conjugated diene-based monomer. In Case A, the diene-based rubber may have a configuration shown in one of the following (i) to (vii).
(i) A configuration in which 50% by weight to 100% by weight of a structural unit derived from a diene-based monomer and 0% by weight to 50% by weight of a structural unit derived from a vinyl-based monomer that is not a diene-based monomer and that is copolymerizable with the diene-based monomer are contained in 100% by weight of structural units.
(ii) A configuration in which more than 50% by weight and not more than 100% by weight of a structural unit derived from a diene-based monomer and not less than 0% by weight and less than 50% by weight of a structural unit derived from a vinyl-based monomer that is not a diene-based monomer and that is copolymerizable with the diene-based monomer are contained in 100% by weight of structural units.
(iii) A configuration in which 60% by weight to 100% by weight of a structural unit derived from a diene-based monomer and 0% by weight to 40% by weight of a structural unit derived from a vinyl-based monomer that is not a diene-based monomer and that is copolymerizable with the diene-based monomer are contained in 100% by weight of structural units.
(iv) A configuration in which 70% by weight to 100% by weight of a structural unit derived from a diene-based monomer and 0% by weight to 30% by weight of a structural unit derived from a vinyl-based monomer that is not a diene-based monomer and that is copolymerizable with the diene-based monomer are contained in 100% by weight of structural units.
(v) A configuration in which 80% by weight to 100% by weight of a structural unit derived from a diene-based monomer and 0% by weight to 20% by weight of a structural unit derived from a vinyl-based monomer that is not a diene-based monomer and that is copolymerizable with the diene-based monomer are contained in 100% by weight of structural units.
(vi) A configuration in which 90% by weight to 100% by weight of a structural unit derived from a diene-based monomer and 0% by weight to 10% by weight of a structural unit derived from a vinyl-based monomer that is not a diene-based monomer and that is copolymerizable with the diene-based monomer are contained in 100% by weight of structural units.
(vii) A configuration in which 100% by weight of structural units are composed only of a structural unit derived from a diene-based monomer.

In Case A, the diene-based rubber may contain, as a structural unit, a structural unit derived from a (meth)acrylate-based monomer in an amount smaller than that of the structural unit derived from the diene-based monomer.

Examples of the diene-based monomer include 1,3-butadiene, isoprene (2-methyl-1,3-butadiene), and 2-chloro-1,3-butadiene. These diene-based monomers may be used alone or in combination of two or more thereof.

Examples of the vinyl-based monomer (hereinafter also referred to as a vinyl-based monomer A) that is not a diene-based monomer and that is copolymerizable with the diene-based monomer include vinylarenes such as styrene, α-methylstyrene, monochlorostyrene, and dichlorostyrene; vinylcarboxylic acids such as acrylic acid and methacrylic acid; vinyl cyanides such as acrylonitrile and methacrylonitrile; vinyl halides such as vinyl chloride, vinyl bromide, and chloroprene; vinyl acetate; alkenes such as ethylene, propylene, butylene, and isobutylene; and polyfunctional monomers such as diallyl phthalate, triallyl cyanurate, triallyl isocyanurate, and divinylbenzene. The above-described vinyl-based monomers A may be used alone or in combination of two or more thereof. Among the above-described vinyl-based monomers A, styrene is particularly preferable. Note that, in the diene-based rubber in Case A, the structural unit derived from the vinyl-based monomer A is a discretionarily selected component. In Case A, the diene-based rubber may be composed only of a structural unit derived from a diene-based monomer.

In Case A, the core part preferably contains a butadiene rubber (hereinafter also referred to as a polybutadiene rubber) composed of a structural unit derived from 1,3-butadiene and/or a butadiene-styrene rubber (also referred to as polystyrene-butadiene) which is a copolymer of 1,3-butadiene and styrene, and particularly preferably contains a polybutadiene rubber. According to the above configuration, the desired effect due to the fine polymer particles (A) containing the diene-based rubber can be further exhibited. Further, it is more preferable that the core part contains a butadiene-styrene rubber also in that transparency of the resulting cured product can be enhanced by adjusting the refractive index.

The butadiene-styrene rubber may have a configuration shown in the following (i) to (v).
(i) A configuration in which more than 50% by weight and not more than 100% by weight of a structural unit derived from butadiene and not less than 0% by weight and less than 50% by weight of a structural unit derived from styrene are contained in 100% by weight of the butadiene-styrene rubber.
(ii) A configuration in which 60% by weight to 100% by weight of a structural unit derived from butadiene and 0% by weight to 40% by weight of a structural unit derived from styrene are contained in 100% by weight of the butadiene-styrene rubber.
(iii) A configuration in which 70% by weight to 100% by weight of a structural unit derived from butadiene and 0% by weight to 30% by weight of a structural unit derived from styrene are contained in 100% by weight of the butadiene-styrene rubber.
(iv) A configuration in which 80% by weight to 100% by weight of a structural unit derived from butadiene and 0% by weight to 20% by weight of a structural unit derived from styrene are contained in 100% by weight of the butadiene-styrene rubber.
(v) A configuration in which 90% by weight to 100% by weight of a structural unit derived from butadiene and 0% by weight to 10% by weight of a structural unit derived from styrene are contained in 100% by weight of the butadiene-styrene rubber.

A case where the core part contains a (meth)acrylate-based rubber (Case B) will be described. In Case B, a wide range of polymer designs for the core part is possible by combining various types of monomers.

The (meth)acrylate-based rubber is a core part containing, as a structural unit, a structural unit derived from a (meth)acrylate-based monomer. In Case B, the (meth)acrylate-based rubber may have a configuration shown in one of the following (i) to (vii).
(i) A configuration in which 50% by weight to 100% by weight of a structural unit derived from a (meth)acrylate-based monomer and 0% by weight to 50% by weight of a structural unit derived from a vinyl-based monomer that is not a (meth)acrylate-based monomer and that is copolymerizable with the (meth)acrylate-based monomer are contained in 100% by weight of structural units.
(ii) A configuration in which more than 50% by weight and not more than 100% by weight of a structural unit derived from a (meth)acrylate-based monomer and not less than 0% by weight and less than 50% by weight of a structural unit derived from a vinyl-based monomer that is not a (meth)acrylate-based monomer and that is copolymerizable with the (meth)acrylate-based monomer are contained in 100% by weight of structural units.
(iii) A configuration in which 60% by weight to 100% by weight of a structural unit derived from a (meth)acrylate-based monomer and 0% by weight to 40% by weight of a structural unit derived from a vinyl-based monomer that is not a (meth)acrylate-based monomer and that is copolymerizable with the (meth)acrylate-based monomer are contained in 100% by weight of structural units.
(iv) A configuration in which 70% by weight to 100% by weight of a structural unit derived from a (meth)acrylate-based monomer and 0% by weight to 30% by weight of a structural unit derived from a vinyl-based monomer that is not a (meth)acrylate-based monomer and that is copolymerizable with the (meth)acrylate-based monomer are contained in 100% by weight of structural units.
(v) A configuration in which 80% by weight to 100% by weight of a structural unit derived from a (meth)acrylate-based monomer and 0% by weight to 20% by weight of a structural unit derived from a vinyl-based monomer that is not a (meth)acrylate-based monomer and that is copolymerizable with the (meth)acrylate-based monomer are contained in 100% by weight of structural units.
(vi) A configuration in which 90% by weight to 100% by weight of a structural unit derived from a (meth)acrylate-based monomer and 0% by weight to 10% by weight of a structural unit derived from a vinyl-based monomer that is not a (meth)acrylate-based monomer and that is copolymerizable with the (meth)acrylate-based monomer are contained in 100% by weight of structural units.
(vii) A configuration in which 100% by weight of structural units are composed only of a structural unit derived from a (meth)acrylate-based monomer.

In Case B, the (meth)acrylate-based rubber may contain, as a structural unit, a structural unit derived from a diene-based monomer in an amount smaller than that of the structural unit derived from the (meth)acrylate-based monomer.

Examples of the (meth)acrylate-based monomer include alkyl (meth)acrylates such as methyl (meth)acrylate, ethyl (meth)acrylate, butyl (meth)acrylate, 2-ethylhexyl (meth)acrylate, octyl (meth)acrylate, dodecyl (meth)acrylate, stearyl (meth)acrylate, and behenyl (meth)acrylate; aromatic ring-containing (meth)acrylates such as phenoxyethyl (meth)acrylate and benzyl (meth)acrylate; hydroxyalkyl (meth)acrylates such as 2-hydroxyethyl (meth)acrylate and 4-hydroxybutyl (meth)acrylate; glycidyl (meth)acrylates such as glycidyl (meth)acrylate and glycidyl alkyl (meth)acrylate; alkoxyalkyl (meth)acrylates; allyl alkyl (meth)acrylates such as allyl (meth)acrylate and allyl alkyl (meth)acrylate; and polyfunctional (meth)acrylates such as monoethylene glycol di(meth)acrylate, triethylene glycol di(meth)acrylate, and tetraethylene glycol di(meth)acrylate. These (meth)acrylate-based monomers may be used alone or in combination of two or more thereof. Among these (meth)acrylate-based monomers, ethyl (meth)acrylate, butyl (meth)acrylate, and 2-ethylhexyl (meth)acrylate are preferable, and butyl (meth)acrylate is more preferable.

In Case B, the (meth)acrylate-based rubber is preferably at least one type selected from the group consisting of ethyl (meth)acrylate rubber, butyl (meth)acrylate rubber, and 2-ethylhexyl (meth)acrylate rubber, and more preferably butyl (meth)acrylate rubber. The ethyl (meth)acrylate rubber is a rubber composed of a structural unit derived from ethyl (meth)acrylate. The butyl (meth)acrylate rubber is a rubber composed of a structural unit derived from butyl (meth)acrylate. The 2-ethylhexyl (meth)acrylate rubber is a rubber composed of a structural unit derived from 2-ethylhexyl (meth)acrylate. According to this configuration, the glass transition temperature (Tg) of the core part becomes low, and as a result, (i) the resulting composition can provide a cured product having excellent toughness, and (ii) the viscosity of the resin composition can be further lowered.

Examples of the vinyl-based monomer (hereinafter also referred to as vinyl-based monomer B) that is not a (meth)acrylate-based monomer and that is copolymerizable with the (meth)acrylate-based monomer include the monomers listed for the vinyl-based monomer A. The vinyl-based monomers B may be used alone or in combination of two or more thereof. Among the vinyl-based monomers B, styrene is particularly preferable. Note that, in the (meth)acrylate-based rubber in Case B, the structural unit derived from the vinyl-based monomer B is a discretionarily selected component. In Case B, the (meth)acrylate-based rubber may be composed only of a structural unit derived from a (meth)acrylate-based monomer.

A case where the core part contains an organosiloxane-based rubber (Case C) will be described. In Case C, the resulting composition can provide a cured product having sufficient heat resistance and excellent impact resistance at low temperatures.

Examples of the organosiloxane-based rubber include (i) organosiloxane-based polymers composed of alkyl or aryl disubstituted silyloxy units, and (ii) organosiloxane-based polymers composed of alkyl or aryl monosubstituted silyloxy units. Examples of the alkyl or aryl disubstituted silyloxy units include dimethylsilyloxy, diethylsilyloxy, methylphenylsilyloxy, diphenylsilyloxy, and dimethylsilyloxy-diphenylsilyloxy. Examples of the alkyl or aryl monosubstituted silyloxy units include organohydrogensilyloxy in which some of sidechain alkyls have been substituted with hydrogen atoms. These organosiloxane-based polymers may be used alone or in combination of two or more thereof.

In the present specification, a polymer composed of a dimethylsilyloxy unit is referred to as a dimethylsilyloxy rubber. In the present specification, a polymer composed of a methylphenylsilyloxy unit is referred to as a methylphenylsilyloxy rubber. In the present specification, a polymer composed of a dimethylsilyloxy unit and a diphenylsilyloxy unit is referred to as a dimethylsilyloxy-diphenylsilyloxy rubber. In Case C, the organosiloxane-based rubber is preferably at least one type selected from the group consisting of dimethylsilyloxy rubbers, methylphenylsilyloxy rubbers, and dimethylsilyloxy-diphenylsilyloxy rubbers because (i) the resulting composition can provide a cured product which has excellent heat resistance, and is more preferably a dimethylsilyloxy rubber because (ii) it is easily available and economical.

The core part may further contain a rubber other than diene-based rubbers, (meth)acrylate-based rubbers, and organosiloxane-based rubbers. Examples of the rubber other than diene-based rubbers, (meth)acrylate-based rubbers, and organosiloxane-based rubbers include natural rubber.

In an embodiment of the present invention, the core part is preferably at least one type selected from the group consisting of butadiene rubbers, butadiene-styrene rubbers, butadiene-(meth)acrylate rubbers, ethyl (meth)acrylate rubbers, butyl (meth)acrylate rubbers, 2-ethylhexyl (meth)acrylate rubbers, dimethylsilyloxy rubbers, methylphenylsilyloxy rubbers, and dimethylsilyloxy-diphenylsilyloxy rubbers, more preferably at least one type selected from the group consisting of butadiene rubbers, butadiene-styrene rubbers, butyl (meth)acrylate rubbers, and dimethylsilyloxy rubbers, and even more preferably at least one type selected from the group consisting of butadiene rubbers, butadiene-styrene rubbers, and butyl acrylate rubbers.

### (Crosslinked structure of core part)

From the viewpoint of maintaining dispersion stability of the fine polymer particles (A) in the thermosetting resin, it is preferable that a crosslinked structure is introduced into the core part. As a method of introducing a crosslinked structure into the core part, a generally used method can be adopted, and examples thereof include the following method. · In production of the core part, a method in which a crosslinkable monomer(s) such as a polyfunctional monomer and/or a mercapto group-containing compound is/are mixed with a monomer which can constitute the core part, and then polymerization is carried out.

In the present specification, producing a polymer such as a core part is also referred to as forming a polymer by polymerization.

Further, examples of the method of introducing a crosslinked structure into the organosiloxane-based rubber include the following methods:
(a) a method of using a polyfunctional alkoxysilane compound in combination with other material when forming the organosiloxane-based rubber by polymerization;
(b) a method of introducing a reactive group (for example, (i) a mercapto group and (ii) a reactive vinyl group, and the like) into the organosiloxane-based rubber, and then adding (i) an organic peroxide, (ii) a polymerizable vinyl monomer, or the like to the obtained reaction product to cause a radical reaction; or
(c) a method of mixing a crosslinkable monomer such as a polyfunctional monomer and/or a mercapto group-containing compound together with other material when forming the organosiloxane-based rubber by polymerization, and then carrying out polymerization.

The polyfunctional monomer is a monomer having, in its molecule, at least two polymerizable unsaturated bonds. The polymerizable unsaturated bond is preferably a carbon-carbon double bond. Examples of the polyfunctional monomer exclude butadiene and include (meth)acrylates having an ethylenically unsaturated double bond, such as allyl alkyl (meth)acrylates and allyl oxyalkyl (meth)acrylates. Examples of a monomer having two (meth)acrylic groups include ethylene glycol di(meth)acrylate, butylene glycol di(meth)acrylate, butanediol di(meth)acrylate, hexanediol di(meth)acrylate, cyclohexane dimethanol di(meth)acrylate, and polyethylene glycol di(meth)acrylates. Examples of the polyethylene glycol di(meth)acrylates include triethylene glycol di(meth)acrylate, tripropylene glycol di(meth)acrylate, tetraethylene glycol di(meth)acrylate, and polyethylene glycol (600) di(meth)acrylate. Examples of a monomer having three (meth)acrylic groups include alkoxylated trimethylolpropane tri(meth)acrylates, glycerol propoxy tri(meth)acrylate, pentaerythritol tri(meth)acrylate, and tris(2-hydroxyethyl)isocyanurate tri(meth)acrylate. Examples of the alkoxylated trimethylolpropane tri(meth)acrylates include trimethylolpropane tri(meth)acrylate and trimethylolpropane triethoxy tri(meth)acrylate. Further, examples of a monomer having four (meth)acrylic groups include pentaerythritol tetra(meth)acrylate and ditrimethylolpropane tetra(meth)acrylate. Still further, examples of a monomer having five (meth)acrylic groups include dipentaerythritol penta(meth)acrylate. Yet further, examples of a monomer having six (meth)acrylic groups include ditrimethylolpropane hexa(meth)acrylate. Examples of the polyfunctional monomer also include diallyl phthalate, triallyl cyanurate, triallyl isocyanurate, and divinylbenzene. The "polymerizable unsaturated bond" can also be said to be an "unsaturated bond having polymerizability", and is intended to mean an unsaturated bond that can serve as a starting point of a polymerization reaction by a radical or the like.

Among the above-described polyfunctional monomers, examples of a polyfunctional monomer that can be preferably used to form the core part by polymerization include allyl methacrylate, ethylene glycol di(meth)acrylate, butylene glycol di(meth)acrylate, butanediol di(meth)acrylate, hexanediol di(meth)acrylate, cyclohexane dimethanol di(meth)acrylate, and polyethylene glycol di(meth)acrylates. These polyfunctional monomers may be used alone or in combination of two or more thereof.

Examples of the mercapto group-containing compound include alkyl group-substituted mercaptan, allyl group-substituted mercaptan, aryl group-substituted mercaptan, hydroxy group-substituted mercaptan, alkoxy group-substituted mercaptan, cyano group-substituted mercaptan, amino group-substituted mercaptan, silyl group-substituted mercaptan, acid group-substituted mercaptan, halo group-substituted mercaptan, and acyl group-substituted mercaptan. The alkyl group-substituted mercaptan is preferably alkyl group-substituted mercaptan having 1 to 20 carbon atoms, and more preferably alkyl group-substituted mercaptan having 1 to 10 carbon atoms. The aryl group-substituted mercaptan is preferably phenyl group-substituted mercaptan. The alkoxy group-substituted mercaptan is preferably alkoxy group-substituted mercaptan having 1 to 20 carbon atoms, and more preferably alkoxy group-substituted mercaptan having 1 to 10 carbon atoms. The acid group-substituted mercaptan is preferably alkyl group-substituted mercaptan having a carboxyl group and 1 to 10 carbon atoms or aryl group-substituted mercaptan having a carboxyl group and 1 to 12 carbon atoms. These mercapto group-containing compounds may be used alone or in combination of two or more thereof.

### (Glass transition temperature of core part)

The glass transition temperature of the core part is preferably not higher than 0°C, more preferably lower than 0°C, more preferably not higher than -20°C, more preferably not higher than -40°C, more preferably not higher than -50°C, more preferably not higher than -55°C, more preferably not higher than -60°C, more preferably not higher than -65°C, more preferably not higher than -70°C, even more preferably not higher than -75°C, and particularly preferably not higher than -80°C. The lower limit of the glass transition temperature of the core part is not particularly limited, but is, for example, not lower than -120°C, and may be not lower than -100°C.

In the present specification, the "glass transition temperature" may also be referred to as "Tg". According to the above configuration, it is possible to obtain fine polymer particles (A) having low Tg and a composition having low Tg. As a result, a resulting composition can provide a cured product having excellent toughness. Further, according to the above configuration, the resulting composition can have a lower viscosity.

In a case where the monomers used in the production (formation by polymerization) of the core part are known, the glass transition temperature (Tg) of the core part can be calculated by the following FOX formula (Mathematical Formula 1): $1 / Tg = {w}_{1} / {Tg}_{1} + {w}_{2} / {Tg}_{2} + … + {w}_{n} / {Tg}_{n}$ (Mathematical Formula 1) where Tg₁, Tg₂, ..., Tgₙ are Tg(K) of homopolymers of the components 1, 2, ..., n that constitute the core part (i.e., monomers used in the production of the core part), respectively, and w₁, w₂, ..., wₙ are weight fractions of the components 1, 2, ..., n that constitute the core part (i.e., monomers used in the production of the core part), respectively. In addition, as the Tg of the homopolymer, for example, numerical values described in Polymer Handbook Fourth Edition (edited by J. Brandup et al., John Wiley & Sons, Inc) can be used.

Further, in a case where the monomer used in the production (formation by polymerization) of the core part is unknown, viscoelasticity measurement (shearing method, measurement frequency: 1 Hz) can be performed using a planar plate made of fine polymer particles (A) to obtain a graph of loss tangent (tan δ), and the peak temperature in the obtained graph can be employed as Tg. Note, here, that in a case where a plurality of peaks are obtained in the graph of tan δ, the glass transition temperature of the core part can be determined by combining with other analysis data such as composition analysis.

The Tg of the core part can be determined by, for example, the composition of the structural unit contained in the core part. In other words, it is possible to adjust the Tg of a resulting core part by changing the composition of the monomer used to produce (form by polymerization) the core part.

### (Volume-average particle size of core part)

The volume-average particle size of the core part is preferably 0.03 µm to 10.00 µm, more preferably 0.05 µm to 10.00 µm, more preferably 0.08 µm to 2.00 µm, even more preferably 0.10 µm to 1.00 µm, still more preferably 0.10 µm to 0.80 µm, and particularly preferably 0.10 µm to 0.50 µm. In a case where the volume-average particle size of the core part is not less than 0.03 µm, a core part having a desired volume-average particle size can be stably obtained. In a case where the volume-average particle size of the core part is not more than 10.00 µm, a resulting cured product has favorable heat resistance and impact resistance. The volume-average particle size of the core part can be measured with use of a dynamic light scattering type particle size distribution measurement apparatus or the like using, as a sample, an aqueous latex containing the core part.

### (Proportion of core part)

The proportion of the core part in the fine polymer particles (A) is preferably 10% by weight to 80% by weight, more preferably 10% by weight to 70% by weight, and even more preferably 10% by weight to 60% by weight in 100% by weight of the fine polymer particles (A). In a case where the proportion of the core part is not less than 10% by weight, a resulting composition can provide a cured product which has excellent toughness and excellent impact resistance. In a case where the proportion of the core part is not more than 80% by weight, the fine polymer particles (A) do not easily agglutinate, and therefore a composition containing the fine polymer particles (A) does not have a high viscosity, and consequently, a resulting composition can have excellent handleability.

### (Gel content of core part)

The core part is preferably one that can swell in an appropriate solvent but is substantially insoluble. The core part is preferably insoluble in the thermosetting resin used.

The gel content of the core part is preferably not less than 30% by weight and not more than 100% by weight, more preferably not less than 40% by weight and not more than 100% by weight, more preferably not less than 50% by weight and not more than 100% by weight, more preferably not less than 60% by weight and not more than 100% by weight, even more preferably not less than 70% by weight and not more than 100% by weight, still more preferably not less than 80% by weight and not more than 100% by weight, particularly preferably not less than 90% by weight and not more than 100% by weight, and most preferably not less than 95% by weight and not more than 100% by weight. In a case where the gel content of the core part falls within the above range, a resulting composition can provide a cured product having excellent toughness.

In the present specification, a method of calculating the gel content is as follows. First, an aqueous latex containing the core part is obtained, and then a powdery and/or granular material of the core part is obtained from the aqueous latex. A method of obtaining the powdery and/or granular material of the core part from the aqueous latex is not particularly limited, and examples thereof include a method of obtaining the powdery and/or granular material of the core part by (i) causing the core part in the aqueous latex to agglutinate, (ii) dehydrating the agglutinate thus obtained, and (iii) further drying the agglutinate. Next, 2.0 g of the powdery and/or granular material of the core part is dissolved in 50 mL of methyl ethyl ketone (MEK). Thereafter, the obtained MEK solution is separated into a part soluble in MEK (MEK-soluble part) and a part insoluble in MEK (MEK-insoluble part). Specifically, the obtained MEK solution is subjected to centrifugal separation with use of a centrifugal separator (CP60E, manufactured by Hitachi Koki Co., Ltd.) at 30,000 rpm for 1 hour, and thereby separated into the MEK-soluble part and the MEK-insoluble part. Note, here, that three sets of centrifugal separations are carried out in total. The weights of the MEK-soluble part and the MEK-insoluble part thus obtained are measured, and then the gel content is calculated by the following formula: 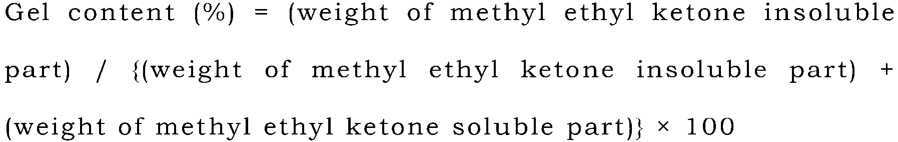 Gel content (%) = (weight of methyl ethyl ketone insoluble part) / {(weight of methyl ethyl ketone insoluble part) + (weight of methyl ethyl ketone soluble part)} × 100

### (Variations of core part)

In an embodiment of the present invention, the "core part" of the fine polymer particles (A) may be composed only of one type of core part which has a structural unit having identical composition. In this case, the "core part" of the fine polymer particles (A) is preferably one type selected from the group consisting of diene-based rubbers, (meth)acrylate-based rubbers, and organosiloxane-based rubbers.

In an embodiment of the present invention, the "core part" of the fine polymer particles (A) may be composed of a plurality of types of core parts which differ in structural unit composition from each other. In this case, the "core part" of the fine polymer particles (A) may be one type or two or more types selected from the group consisting of diene-based rubbers, (meth)acrylate-based rubbers, and organosiloxane-based rubbers. In other words, the "core part" of the fine polymer particles (A) may be a plurality of types, which differ in structural unit composition from each other, of the following rubbers: diene-based rubbers, (meth)acrylate-based rubbers, and organosiloxane-based rubbers.

In an embodiment of the present invention, a case where the "core part" of the fine polymer particles (A) is composed of a plurality of types of core parts which differ in structural unit composition from each other will be described. In this case, the plurality of types of core parts are referred to as a core part₁, a core part₂, ..., and a core partₙ, respectively. Note, here, that n is an integer of 2 or more. The "core part" of the fine polymer particles (A) may include a complex of the core part₁, the core part₂, ..., and the core partₙ which have been separately formed by polymerization. The "core part" of the fine polymer particles (A) may include one core part obtained by forming the core part₁, the core part₂, ..., and the core partₙ in order by polymerization. Forming a plurality of core parts (polymers) by polymerization in order in this manner is also referred to as multistage polymerization. One core part obtained by multistage polymerization of a plurality of types of core parts is also referred to as a multistage-polymerization core part. A method for producing a multistage-polymerization core part will be described later in detail.

A multistage-polymerization core part composed of the core part₁, the core part₂, ..., and the core partₙ will be described. In the multistage-polymerization core part, the core partₙ can cover at least part of a core partₙ₋₁ or the whole of the core partₙ₋₁. In the multistage-polymerization core part, part of the core partₙ may be located inside the core partₙ₋₁.

In the multistage-polymerization core part, the plurality of core parts may form a layer structure. For example, in a case where the multistage-polymerization core part is composed of the core part₁, the core part₂, and the core part₃, aspects of the present invention also include an aspect in which the core part₁ forms the innermost layer, a layer of the core part₂ is formed on the outer side of the core part₁, and a layer of the core part₃ is further formed on the outer side of the layer of the core part₂ as the outermost layer of the core part. Thus, it can also be said that the multistage-polymerization core part in which the plurality of core parts form a layer structure is a multilayered core part. That is, in an embodiment of the present invention, the "core part" of the fine polymer particles (A) may include (i) a complex of a plurality of types of core parts, (ii) a multistage-polymerization core part, and/or (iii) a multilayered core part.

### (2-1-2. Graft part)

In the present specification, a polymer grafted to the core part is referred to as a graft part. In an embodiment of the present invention, the graft part preferably contains at least one type of structural unit selected from the group consisting of an aromatic vinyl unit, a vinyl cyanide unit, and a (meth)acrylate unit. In a case where the graft part has the above configuration, there is an advantage that the fine polymer particles (A) do not easily agglutinate.

Specific examples of the aromatic vinyl unit include structural units derived from monomers or compounds, including: unsubstituted vinyl aromatic compounds such as styrene and 2-vinylnaphthalene; vinyl-substituted aromatic compounds such as α-methylstyrene, 3-methylstyrene, 4-methylstyrene, 2,4-dimethylstyrene, 2,5-dimethylstyrene, 3,5-dimethylstyrene, and 2,4,6-trimethylstyrene; ring-alkoxylated vinyl aromatic compounds such as 4-methoxystyrene and 4-ethoxystyrene; ring-halogenated vinyl aromatic compounds such as 2-chlorostyrene and 3-chlorostyrene; ring-ester-substituted vinyl aromatic compounds such as 4-acetoxystyrene; ring-hydroxylated vinyl aromatic compounds such as 4-hydroxystyrene; aromatic methacrylates such as phenyl methacrylate; and aromatic monomers such as acenaphthalene and indene.

Specific examples of the vinyl cyanide unit include structural units derived from monomers such as acrylonitrile and methacrylonitrile.

Specific examples of the (meth)acrylate unit include structural units derived from monomers such as methyl (meth)acrylate, ethyl (meth)acrylate, butyl (meth)acrylate, hydroxyethyl (meth)acrylate, and hydroxybutyl (meth)acrylate.

As the at least one type of structural unit selected from the group consisting of an aromatic vinyl unit, a vinyl cyanide unit, and a (meth)acrylate unit described above, only one type may be used, or two or more types may be used in combination.

The graft part preferably contains, as the structural unit, the aromatic vinyl unit, the vinyl cyanide unit, and the (meth)acrylate unit in a total amount of 10% by weight to 95% by weight, more preferably 30% by weight to 92% by weight, even more preferably 50% by weight to 90% by weight, particularly preferably 60% by weight to 87% by weight, and most preferably 70% by weight to 85% by weight in 100% by weight of the polymer contained in the graft part. According to this configuration, there is an advantage that the fine polymer particles (A) do not easily agglutinate.

The graft part (i) preferably contains at least one type of structural unit selected from the group consisting of an unsubstituted vinyl aromatic unit and a vinyl-substituted aromatic unit, and may be composed only of at least one type of structural unit selected from the group, (ii) more preferably contains at least one type of structural unit selected from the group consisting of a styrene unit, a 2-vinylnaphthalene unit, an α-methylstyrene unit, 3-methylstyrene, 4-methylstyrene, 2,4-dimethylstyrene, 2,5-dimethylstyrene, 3,5-dimethylstyrene, and 2,4,6-trimethylstyrene, and may be composed only of at least one type of structural unit selected from the group, (iii) even more preferably contains at least one type of structural unit selected from the group consisting of a styrene unit and an α-methylstyrene unit, and may be composed only of at least one type of structural unit selected from the group, and (iv) particularly preferably contains a styrene unit, and may be composed only of a styrene unit. According to this configuration, there is an advantage that the peak height of tan δ in a temperature region of not lower than 10°C of the noise reduction agent becomes high.

In an embodiment of the present invention, the total amount of the unsubstituted vinyl aromatic unit and the vinyl-substituted aromatic unit in the graft part is preferably more than 70% by weight and not more than 100% by weight, more preferably 75% by weight to 100% by weight, even more preferably 80% by weight to 100% by weight, and particularly preferably 85% by weight to 100% by weight in 100% by weight of the graft part. According to this configuration, there is an advantage that the peak height of tan δ in a temperature region of not lower than 10°C of the noise reduction agent becomes high.

The graft part may further contain, as the structural unit, a structural unit derived from a monomer having a reactive group. The monomer having a reactive group is preferably a monomer having at least one type of reactive group selected from the group consisting of an epoxy group, an oxetane group, a hydroxy group, an amino group, an imide group, a carboxylic acid group, a carboxylic anhydride group, a cyclic ester, a cyclic amide, a benzoxazine group, and a cyanate ester group, more preferably a monomer having at least one type of reactive group selected from the group consisting of an epoxy group, a hydroxy group, and a carboxylic acid group, and most preferably a monomer having an epoxy group. This makes it possible to keep the fine polymer particles (A) in a well dispersed state without causing the fine polymer particles (A) to agglutinate in the composition or a molded product thereof.

Specific examples of the monomer having an epoxy group include glycidyl group-containing vinyl monomers such as glycidyl (meth)acrylate, 4-hydroxybutyl (meth)acrylate glycidyl ether, and allyl glycidyl ether.

Specific examples of the monomer having a hydroxy group include, for example, (a) hydroxy straight-chain alkyl (meth)acrylates (particularly preferably, hydroxy straight chain C1-C6 alkyl (meth)acrylates) such as 2-hydroxyethyl (meth)acrylates, hydroxypropyl (meth)acrylates, and 4-hydroxybutyl (meth)acrylates, (b) caprolactone-modified hydroxy (meth)acrylates, (c) hydroxy branching alkyl (meth)acrylates such as α-(hydroxymethyl) methyl acrylates and α-(hydroxymethyl) ethyl acrylates, and (d) hydroxyl-group-containing (meth)acrylates such as mono (meth)acrylates of a polyester diol (particularly preferably, saturated polyester diol) obtained from a dicarboxylic acid (e.g., phthalic acid) and a dihydric alcohol (e.g., propylene glycol). Note that the "straight chain C1-C6 alkyl" is intended to mean a straight-chain alkyl having 1 to 6 carbon atoms.

Specific examples of the monomer having a carboxylic acid group include, for example, (a) monocarboxylic acids such as acrylic acid, methacrylic acid, and crotonic acid, and (b) dicarboxylic acids such as maleic acid, fumaric acid, and itaconic acid. As the monomer having a carboxylic acid group, any of the monocarboxylic acids is suitably used.

The above-described monomers having a reactive group(s) may be used alone or in combination of two or more thereof.

The graft part preferably contains 0.5% by weight to 90% by weight, more preferably 1% by weight to 50% by weight, even more preferably 2% by weight to 35% by weight, and particularly preferably 3% by weight to 20% by weight of structural units derived from a monomer having a reactive group in 100% by weight of the polymer contained in the graft part. In a case where the graft part contains not less than 0.5% by weight of structural units derived from a monomer having a reactive group in 100% by weight of the polymer contained in the graft part, there is an advantage that a resulting composition can provide a composition capable of providing a molded product having sufficient impact resistance. In a case where the graft part contains not more than 90% by weight of structural units derived from a monomer having a reactive group in 100% by weight of the polymer, there is an advantage that a resulting composition can provide a composition capable of providing a molded product having sufficient impact resistance, and storage stability of the composition becomes favolable.

The structural unit derived from a monomer having a reactive group is preferably contained in the graft part, and more preferably contained only in the graft part.

From the viewpoint of ease of dispersion of the fine polymer particles (A) into the matrix resin, the graft part preferably does not contain a structural unit derived from a monomer having a reactive group. From the viewpoint of ease of dispersion of the fine polymer particles (A) into the matrix resin, the amount of the structural unit derived from a monomer having a reactive group in 100% by weight of the polymer contained in the graft part is preferably not more than 10% by weight, more preferably not more than 5% by weight, more preferably not more than 3% by weight, even more preferably not more than 1% by weight, and particularly preferably 0% by weight.

The graft part may contain, as a structural unit, a structural unit derived from a polyfunctional monomer. In a case where the graft part contains a structural unit derived from a polyfunctional monomer, there are the following advantages, for example: (a) it is possible to prevent swelling of the fine polymer particles (A) in the composition; (b) since the composition has a low viscosity, the composition tends to have favorable handleability; and (c) the dispersibility of the fine polymer particles (A) in the composition improves.

In a case where the graft part does not contain a structural unit derived from a polyfunctional monomer, a resulting composition can provide a composition capable of providing a molded product which has more excellent toughness and more excellent impact resistance, as compared to a case where the graft part contains a structural unit derived from a polyfunctional monomer.

Examples of the polyfunctional monomer that has, in its molecule, at least two polymerizable unsaturated bonds include the polyfunctional monomers exemplified in the section under (Crosslinked structure of core part) described above.

Among the above-described polyfunctional monomers, examples of a polyfunctional monomer which can be preferably used to form the graft part by polymerization include allyl methacrylate, ethylene glycol di(meth)acrylate, butylene glycol di(meth)acrylate, butanediol di(meth)acrylate, hexanediol di(meth)acrylate, cyclohexane dimethanol di(meth)acrylate, and polyethylene glycol di(meth)acrylates. These polyfunctional monomers may be used alone or in combination of two or more thereof.

The graft part preferably contains 1% by weight to 20% by weight, and more preferably 5% by weight to 15% by weight of structural units derived from a polyfunctional monomer in 100% by weight of the polymer contained in the graft part.

In the formation of the graft part by polymerization, the above-described monomers may be used alone or in combination of two or more thereof. Further, the graft part may contain, as a structural unit, a structural unit derived from another monomer in addition to the structural unit derived from the above-described monomer.

### (Glass transition temperature of graft part)

The glass transition temperature of the graft part is preferably not lower than 0°C, more preferably not lower than 10°C, more preferably not lower than 20°C, more preferably not lower than 30°C, more preferably not lower than 40°C, more preferably not lower than 50°C, more preferably not lower than 60°C, more preferably not lower than 70°C, more preferably not lower than 80°C, even more preferably not lower than 90°C, and particularly preferably not lower than 100°C. The upper limit of the glass transition temperature of the graft part is not particularly limited, but is, for example, not higher than 120°C, and may be not higher than 110°C.

The Tg of the graft part can be determined by, for example, the composition of the structural unit contained in the graft part. In other words, it is possible to adjust the Tg of a resulting graft part by changing the composition of the monomer used to produce (form by polymerization) the graft part.

In a case where the monomers used in the production (formation by polymerization) of the graft part are known, the glass transition temperature (Tg) of the graft part can be calculated by the following FOX formula (Mathematical Formula 1): $1 / Tg = {w}_{1} / {Tg}_{1} + {w}_{2} / {Tg}_{2} + … + {w}_{n} / {Tg}_{n}$ (Mathematical Formula 1) where Tg₁, Tg₂, ..., Tgₙ are Tg(K) of homopolymers of the components 1, 2, ..., n that constitute the graft part (i.e., monomers used in the production of the graft part), respectively, and w₁, w₂, ..., wₙ are weight fractions of the components 1, 2, ..., n that constitute the graft part (i.e., monomers used in the production of the graft part), respectively. In addition, as the Tg of the homopolymer, for example, numerical values described in Polymer Handbook Fourth Edition (edited by J. Brandup et al., John Wiley & Sons, Inc) can be used.

In a case where the monomer used in the production (formation by polymerization) of the graft part is unknown, viscoelasticity measurement (shearing method, measurement frequency: 1 Hz) can be performed using a planar plate made of fine polymer particles (A) to obtain a graph of loss tangent (tan δ), and the peak temperature in the obtained graph can be employed as Tg. Note, here, that in a case where a plurality of peaks are obtained in the graph of tan δ, the glass transition temperature of the graft part can be determined by combining with other analysis data such as composition analysis.

### (Graft rate of graft part)

In the preparation of the graft part in the production of the fine polymer particles (A), when a monomer mixture used for the preparation of the graft part is polymerized in the presence of the core part, a polymer which is identical in composition to the graft part and which is not grafted to the core part may be generated. In the preparation of the graft part in the production of the fine polymer particles (A), when a monomer mixture used for the preparation of the graft part is polymerized in the presence of the core part, at least a part of the polymer obtained from the monomer mixture can be grafted to the core part. In the present specification, the "polymer which is identical in composition to the graft part and which is not grafted to the core part" is also referred to as a non-grafted polymer. The non-grafted polymer may or may not be removed from an aqueous latex of the obtained fine polymer particles (A). In other words, in an embodiment of the present invention, the noise reduction agent may have a polymer (non-grafted polymer) which is identical in composition to the graft part and which is not grafted to the core part. The non-grafted polymer contained in the noise reduction agent corresponds to a polymer (B) described later.

In the present specification, among polymers produced in the production (formation by polymerization) of the graft part, the proportion of the polymer grafted to the core part, i.e., the proportion of the graft part, is referred to as a graft rate. It can also be said that the graft rate is a value represented by (weight of graft part) / {(weight of graft part) + (weight of non-grafted polymer)} × 100.

In the production (formation by polymerization) of the graft part, a soluble part also exists in addition to the graft part and the non-grafted polymer. This soluble part is intended to mean unpolymerized monomers and auxiliary materials such as an initiator.

The fine polymer particles (A), the non-grafted polymer, and the soluble part can be distinguished by, for example, a method for determining the solubility/insolubility in a solvent. Examples of such a method include a method in which (i) the fine polymer particles (A) are identified if insoluble in MEK, (ii) a non-grafted polymer is identified if soluble in MEK but insoluble in methanol, and (iii) a soluble part is identified if soluble in both MEK and methanol.

In the present specification, the graft rate was calculated by the following method using the aqueous latex immediately after producing the fine polymer particles (A). First, an aqueous latex in an amount equivalent to 2 g of solid content in the aqueous latex immediately after the production of the fine polymer particles (A) and 50 ml of methyl ethyl ketone (MEK) are mixed to prepare a MEK solution. Alternatively, a powdery and/or granular material of the fine polymer particles (A) is obtained from the aqueous latex immediately after the production of the fine polymer particles (A), and 2 g of the obtained powdery and/or granular material is mixed with 50 mL of MEK to prepare a MEK solution. A specific example of a method of obtaining the powdery and/or granular material of the fine polymer particles (A) from the aqueous latex is a method of obtaining the powdery and/or granular material of the fine polymer particles (A) by (i) causing the fine polymer particles (A) in the aqueous latex to coagulate, (ii) dehydrating the coagulate thus obtained, and (iii) further drying the coagulate. Thereafter, the MEK solution thus obtained is separated into a part soluble in MEK (MEK-soluble part) and a part insoluble in MEK (MEK-insoluble part). Specifically, the following (1) to (3) are carried out: (1) The obtained MEK solution is subjected to centrifugal separation with use of a centrifugal separator (CP60E, manufactured by Hitachi Koki Co., Ltd.) at rotation speed of 30000 rpm for 1 hour, and thereby separated into the MEK-soluble part and the MEK-insoluble part. (2) The obtained MEK-soluble part and MEK are mixed. The resultant MEK mixture is subjected to centrifugal separation with use of the foregoing centrifugal separator at rotation speed 30000 rpm for 1 hour, and the MEK mixture is separated into the MEK-soluble part and the MEK-insoluble part. (3) The above operation (2) is repeated one more time (that is, the centrifugal separation is carried out three times in total). By such an operation, a concentrated MEK-soluble part is obtained. Next, 20 ml of the concentrated MEK-soluble part is mixed with 200 ml of methanol. An aqueous calcium chloride solution obtained by dissolving 0.01 g of calcium chloride in water is added to the obtained mixture, and the mixture thus obtained is stirred for 1 hour. Thereafter, the obtained mixture is separated into a methanol-soluble part and a methanol-insoluble part.

The graft rate is calculated by the following formula: 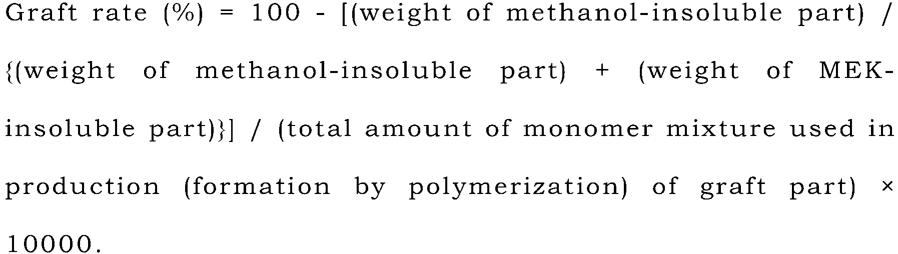 Graft rate (%) = 100 - [(weight of methanol-insoluble part) / {(weight of methanol-insoluble part) + (weight of MEK-insoluble part)}] / (total amount of monomer mixture used in production (formation by polymerization) of graft part) × 10000.

In the method of calculating the graft rate described above, (a) the MEK-insoluble part is the fine polymer particles (A), and (b) the MEK-soluble part and methanol-insoluble part is the non-grafted polymer.

The lower limit of the graft rate of the graft part is preferably not less than 5%, more preferably not less than 10%, more preferably not less than 15%, more preferably not less than 20%, more preferably not less than 25%, more preferably not less than 30%, more preferably not less than 35%, more preferably not less than 40%, more preferably not less than 45%, more preferably not less than 50%, more preferably not less than 55%, more preferably not less than 60%, more preferably not less than 65%, more preferably not less than 70%, more preferably not less than 75%, more preferably not less than 80%, more preferably not less than 85%, more preferably not less than 90%, and more preferably not less than 95%. In a case where the graft rate is not less than 5%, there is an advantage that the viscosity of the composition does not become too high. The upper limit of the graft rate of the graft part is preferably not more than 100%, more preferably not more than 95%, more preferably not more than 90%, more preferably not more than 85%, more preferably not more than 80%, more preferably not more than 75%, more preferably not more than 70%, more preferably not more than 65%, more preferably not more than 60%, more preferably not more than 55%, more preferably not more than 50%, more preferably not more than 45%, more preferably not more than 40%, more preferably not more than 35%, more preferably not more than 30%, more preferably not more than 25%, more preferably not more than 20%, more preferably not more than 15%, and more preferably not more than 10%.

The graft rate of the graft part can be appropriately adjusted by changing the amount of the chain transfer agent used during the preparation of the graft part.

### (Proportion of graft part)

In an embodiment of the present invention, the proportion of the graft part in the fine polymer particles (A) is preferably 20% by weight to 90% by weight, more preferably 30% by weight to 90% by weight, and even more preferably 40% by weight to 90% by weight in 100% by weight of the fine polymer particles (A).

### (Variations of graft part)

In an embodiment of the present invention, the graft part may be composed only of one type of graft part which has a structural unit having identical composition. In an embodiment of the present invention, the graft part may be composed of a plurality of types of graft parts which have structural units different from each other in composition.

In an embodiment of the present invention, a case where the graft part is composed of a plurality of types of graft parts will be described. In this case, the plurality of types of graft parts are referred to as a graft part₁, a graft part₂, ..., a graft partₙ (n is an integer of 2 or more). The graft part may include a complex of the graft part₁, the graft part₂, ..., and the graft partₙ which have been separately formed by polymerization. The graft part may include one polymer obtained by forming the graft part₁, the graft part₂, ..., and the graft partₙ by polymerization in order. Forming a plurality of polymer parts (graft parts) by polymerization in order in this manner is also referred to as multistage polymerization. One polymer obtained by multistage polymerization of a plurality of types of graft parts is also referred to as a multistage-polymerization graft part. A method for producing a multistage-polymerization graft part will be described later in detail.

In a case where the graft part is composed of the plurality of types of graft parts, not all of the plurality of types of graft parts need to be grafted to the core part. In a case where the graft part is composed of the plurality of types of graft parts, it is only necessary that at least part of at least one type of the plurality of types of graft parts be grafted to the core part. The other of the plurality of types of graft parts (the other types of graft parts) may be grafted to the graft parts which is grafted to the core part. Further, in a case where the graft part is composed of the plurality of types of graft parts, the noise reduction agent may have a plurality of types of polymers (plurality of types of polymers (B)) which are identical in composition to the plurality of types of graft parts and which are not grafted to the core part.

A multistage-polymerization graft part composed of the graft part₁, the graft part₂, ..., and the graft partₙ will be described. In the multistage-polymerization graft part, the graft partₙ can cover at least part of a graft partₙ₋₁ or the whole of the graft partₙ₋₁. In the multistage-polymerization graft part, part of the graft partₙ may be located inside the graft partₙ₋₁.

In the multistage-polymerization graft part, the plurality of graft parts may form a layer structure. For example, in a case where the multistage-polymerization graft part is composed of the graft part₁, the graft part₂, and the graft part₃, aspects of the present invention also include an aspect in which the graft part₁ forms the innermost layer of the graft part, a layer of the graft part₂ is formed on the outer side of the graft part₁, and a layer of the graft part₃ is further formed on the outer side of the layer of the graft part₂ as the outermost layer. Thus, it can also be said that the multistage-polymerization graft part in which the plurality of graft parts form a layer structure is a multilayered graft part. That is, in an embodiment of the present invention, the graft part may include (a) a complex of a plurality of types of graft parts, (b) a multistage-polymerization graft part, and/or (c) a multilayered graft part.

In a case where the core part and the graft part are formed in this order by polymerization in production of the fine polymer particles (A), at least part of the graft part can cover at least part of the core part in the resulting fine polymer particles (A). The wording "the core part and the graft part are formed in this order by polymerization" can be rephrased as follows: the core part and the graft part are subjected to multistage polymerization. It can also be said that the fine polymer particles (A) obtained by multistage polymerization of the core part and the graft part are a multistage polymer.

In a case where the fine polymer particles (A) are a multistage polymer, the graft part can cover at least part of the core part or the whole of the core part. In a case where the fine polymer particles (A) are a multistage polymer, part of the graft part may be located inside the core part. At least part of the graft part preferably covers at least part of the core part. In other words, at least part of the graft part is preferably present on the outermost side of the fine polymer particles (A).

In a case where the fine polymer particles (A) are a multistage polymer, the core part and the graft part may form a layer structure. For example, aspects of the present invention also include an aspect in which the core part forms the innermost layer (also referred to as a core layer) and a layer of the graft part is formed on the outer side of the core part as the outermost layer (also referred to as a shell layer). It can also be said that a structure in which the core part is present as a core layer and the graft part is present as a shell layer is a core-shell structure. Thus, it can also be said that the fine polymer particles (A) that contain the core part and the graft part which form a layer structure (core-shell structure) are a multilayered polymer or a core-shell polymer. That is, in an embodiment of the present invention, the fine polymer particles (A) may be a multistage polymer and/or a multilayered polymer or a core-shell polymer. Note, however, that the fine polymer particles (A) are not limited to the above configuration, provided that the fine polymer particles (A) have the core part and the graft part.

### (2-1-4. Volume-average particle size (Mv) of fine polymer particles (A))

The volume-average particle size (Mv) of the fine polymer particles (A) is preferably 0.10 µm to 10.00 µm, more preferably 0.10 µm to 1.00 µm, even more preferably 0.10 µm to 0.80 µm, and particularly preferably 0.10 µm to 0.50 µm, because it is possible to obtain a composition which has a desired viscosity and which is highly stable. In a case where the volume-average particle size (Mv) of the fine polymer particles (A) falls within the above range, there is also an advantage that dispersibility of the fine polymer particles (A) in the composition becomes favorable. In the present specification, the "volume-average particle size (Mv) of the fine polymer particles (A)" is intended to mean the volume-average particle size of primary particles of the fine polymer particles (A) unless otherwise specified. The volume-average particle size of the fine polymer particles (A) can be measured with use of a dynamic light scattering type particle size distribution measurement apparatus or the like using, as a sample, an aqueous latex containing the fine polymer particles (A).

### (2-1-5. Method for producing fine polymer particles (A))

The following description will discuss an example of a method for producing fine polymer particles (A). The fine polymer particles (A) can be produced, for example, as follows: after a core part is formed by polymerization, a polymer which constitutes a graft part is graft polymerized to the core part in the presence of the core part.

The fine polymer particles (A) can be produced by a known method, for example, a method such as an emulsion polymerization method, a suspension polymerization method, or a microsuspension polymerization method. Specifically, the formation of the core part by polymerization and the formation of the graft part by polymerization (graft polymerization) in the fine polymer particles (A) can be achieved by a known method, for example, a method such as an emulsion polymerization method, a suspension polymerization method, or a microsuspension polymerization method. Among these methods, the emulsion polymerization method is particularly preferable as the method for producing the fine polymer particles (A). The emulsion polymerization method has the following advantages: it facilitates (i) compositional design of the fine polymer particles (A), (ii) industrial production of the fine polymer particles (A), and (iii) obtainment of an aqueous latex suitably used in the present production method (described later). A method for producing the core part and the graft part which can be contained in the fine polymer particles (A) will be described below.

### (Method for producing core part)

The core part is preferably produced by polymerizing at least one type of monomer selected from the group consisting of diene-based monomers, (meth)acrylate-based monomers, and organosiloxane-based monomers.

A case where the core part contains at least one type selected from the group consisting of diene-based rubbers and (meth)acrylate-based rubbers will be considered. In this case, the core part can be produced by polymerizing at least one type of monomer selected from the group consisting of diene-based monomers and (meth)acrylate-based monomers. The polymerization of the monomer in this case can be carried out by a method such as emulsion polymerization, suspension polymerization, or microsuspension polymerization, and as the method, for example, the method described in WO 2005/028546 can be used.

A case where the "core part" of the fine polymer particles (A) is composed of a plurality of types of core parts (for example, a core part₁, a core part₂, ..., a core partₙ) will be described. In this case, a complex which is composed of the plurality of types of core parts may be produced in the following manner: the core part₁, the core part₂, ..., and the core partₙ are each formed by polymerization individually by any of the above-described methods, and then these core parts are mixed and complexed. Alternatively, the core part₁, the core part₂, ..., and the core partₙ may be formed in order by multistage polymerization to produce one core part which is composed of the plurality of types of core parts.

The multistage polymerization of the core parts will be specifically described. For example, the multistage-polymerization core part can be obtained by carrying out in order the following steps (1) to (4): (1) The core part₁ is formed by polymerization; (2) next, the core part₂ is formed by polymerization in the presence of the core part₁ to obtain a two-stage core part₁₊₂; (3) subsequently, a core part₃ is formed by polymerization in the presence of the core part₁₊₂ to obtain a three-stage core part₁₊₂₊₃; (4) after a similar process(es) is/are carried out, the core partₙ is formed by polymerization in the presence of a core part_{1+2+ ... +(n-1)} to obtain a multistage-polymerization core part_{1+2+ ... +n}.

### (Method for producing graft part)

The graft part can be formed, for example, by polymerizing, by known radical polymerization in the presence of the core part, the monomer used to form the graft part. In a case where a core part is obtained as an aqueous latex, the formation of the graft part by polymerization is preferably carried out by an emulsion polymerization method. The graft part can be produced in accordance with, for example, the method described in WO 2005/028546.

The method for producing the graft part in a case where the graft part is composed of a plurality of types of graft parts (for example, a graft part₁, a graft part₂, ..., a graft partₙ) will be described. In this case, the graft part (complex) which is composed of the plurality of types of graft parts may be produced in the following manner: the graft part₁, the graft part₂, ... and the graft partₙ are each formed by polymerization individually by any of the above-described methods, and then these graft parts are mixed and complexed. Alternatively, the graft part₁, the graft part₂, ..., the graft partₙ may be formed in order by multistage polymerization to produce one graft part which is composed of the plurality of types of graft parts.

The multistage polymerization of the graft parts will be specifically described. For example, the multistage-polymerization graft part can be obtained by carrying out in order the following steps (1) to (4): (1) The graft part₁ is formed by polymerization; (2) next, the graft part₂ is formed by polymerization in the presence of the graft part₁ to obtain a two-stage graft part₁₊₂; (3) subsequently, a graft part₃ is formed by polymerization in the presence of the graft part₁₊₂ to obtain a three-stage graft part₁₊₂₊₃; (4) after a similar process(es) is/are carried out, the graft partₙ is formed by polymerization in the presence of a graft part_{1+2+ ... +(n-1)} to obtain a multistage-polymerization graft part_{1+2+ ... +n}.

In a case where the graft part is composed of the plurality of types of graft parts, the fine polymer particles (A) may be produced as follows: the graft part which has the plurality of types of graft parts is formed by polymerization, and then these graft parts are graft polymerized to the core part. The fine polymer particles (A) may be produced as follows: in the presence of the core part, a plurality of types of polymers which constitute the graft part are formed in order by multistage graft polymerization with respect to the core part.

In a case where emulsion polymerization is employed as the method of producing the fine polymer particles (A), a known emulsifying agent (dispersion agent) can be used as an emulsifying agent (dispersion agent) in the production of the fine polymer particles (A). Examples of the emulsifying agent encompass anionic emulsifying agents, nonionic emulsifying agents, polyvinyl alcohols, alkyl-substituted celluloses, polyvinylpyrrolidone, polyacrylic acid derivatives, and the like. Examples of the anionic emulsifying agent encompass sulfur-based emulsifying agents, phosphorus-based emulsifying agents, sarcosine acid-based emulsifying agents, carboxylic acid-based emulsifying agents, and the like. Examples of the sulfur-based emulsifying agent encompass sodium dodecylbenzenesulfonate (abbreviated as SDBS), and the like. Examples of the phosphorus-based emulsifying agent encompass sodium polyoxyethylene lauryl ether phosphate and the like.

In a case where emulsion polymerization is employed as the method of producing the fine polymer particles (A), a pyrolytic initiator can be used in the production of the fine polymer particles (A). It is possible to use, as the pyrolytic initiator, a known initiator such as (i) 2,2'-azobisisobutyronitrile, and (ii) peroxides such as organic peroxides and inorganic peroxides, for example. Examples of the organic peroxide encompass t-butylperoxy isopropyl carbonate, paramenthane hydroperoxide, cumene hydroperoxide, dicumyl peroxide, t-butyl hydroperoxide, di-t-butyl peroxide, and t-hexyl peroxide. Examples of the inorganic peroxide encompass hydrogen peroxide, potassium persulfate, and ammonium persulfate.

In the production of the fine polymer particles (A), a redox initiator can also be used. The redox initiator is an initiator which contains a combination of (i) a peroxide such as an organic peroxide and/or an inorganic peroxide and (ii) a reducing agent such as a transition metal salt (such as iron (II) sulfate), sodium formaldehyde sulfoxylate and/or glucose. Further, as necessary, a chelating agent such as disodium ethylenediaminetetraacetate, and/or as necessary a phosphorus-containing compound such as sodium pyrophosphate may be used in combination.

Using the redox initiator makes it possible to (i) carry out polymerization even at a low temperature at which pyrolysis of the peroxide substantially does not occur and (ii) select a polymerization temperature from a wide range of temperatures. Thus, using the redox initiator is preferable. Out of redox initiators, redox initiators in which organic peroxides such as cumene hydroperoxide, dicumyl peroxide, paramenthane hydroperoxide, and t-butyl hydroperoxide are used as peroxides are preferable. The amount of the initiator used can be within a known range. In a case where the redox initiator is used, the amounts of, for example, the reducing agent used, the transition metal salt used, and the chelating agent used can be within known ranges.

In a case where, in the formation of the core part or the graft part by polymerization, a polyfunctional monomer is used to introduce a crosslinked structure into the core part or the graft part, a known chain transfer agent can be used in an amount within a known range. By using the chain transfer agent, it is possible to easily adjust the molecular weight and/or the degree of crosslinking of the resulting core part or the resulting graft part.

In the production of the fine polymer particles (A), a surfactant can be further used, in addition to the above-described components. The type and the amount of the surfactant used are within known ranges.

In the production of the fine polymer particles (A), conditions of polymerization such as polymerization temperature, pressure, and deoxygenation can be, as appropriate, conditions within known numerical ranges.

By the above-described method for producing the fine polymer particles (A), it is possible to obtain an aqueous latex containing the fine polymer particles (A). That is, the description in the section under (2-1-5. Method for producing fine polymer particles (A)) can be incorporated as the description regarding a method for preparing aqueous latex in a method for producing the present composition.

### [3. Polymer (B)]

The present noise reduction agent may contain a polymer (B). The polymer (B) can be mixed mainly in the process of producing the fine polymer particles (A). Specifically, in the production (formation by polymerization) of the graft part in the production of the fine polymer particles (A), a polymer (non-grafted polymer) not bound to the core part can be generated. By not removing the non-grafted polymer from the obtained aqueous latex of the fine polymer particles (A), the non-grafted polymer can become the polymer (B) in the obtained noise reduction agent. Note that the polymer (B) is not limited to one mixed in the process of producing the fine polymer particles (A) described above, and also includes a polymer added separately.

A case where the noise reduction agent contains the polymer (B) derived only from the non-grafted polymer generated in the process of producing the fine polymer particles (A) will be described. In this case, the lower the graft rate in the fine polymer particles (A), the larger the amount of the polymer (B) becomes.

### (3-1. Proportion of polymer (B))

In an embodiment of the present invention, the proportion of the polymer (B) in the noise reduction agent is not particularly limited. The proportion of the polymer (B) in the noise reduction agent may be 1.0% by weight to 50.0% by weight, 3.0% by weight to 45.0% by weight, or 5.0% by weight to 40.0% by weight in 100% by weight of the total of the fine polymer particles (A) and the polymer (B). The proportion of the polymer (B) in the noise reduction agent is preferably 7.0% by weight to 40.0% by weight, more preferably 10.0% by weight to 40.0% by weight, even more preferably 15.0% by weight to 40.0% by weight, and particularly preferably 20.0% by weight to 40.0% by weight in 100% by weight of the total of the fine polymer particles (A) and the polymer (B). Since a resin composition for a friction material having low viscosity and being easy to handle can be provided, the proportion of the polymer (B) in the noise reduction agent is preferably 5.0% by weight to 30.0% by weight, more preferably 5.0% by weight to 20.0% by weight, even more preferably 5.0% by weight to 15.0% by weight, particularly preferably 5.0% by weight to 12.0% by weight, and most preferably 5.0% by weight to 10.0% by weight in 100% by weight of the total of the fine polymer particles (A) and the polymer (B).

When the noise reduction agent contains the polymer (B) derived only from the non-grafted polymer generated in the process of producing the fine polymer particles (A), the composition of the polymer (B) may be the same as the composition of the graft part of the fine polymer particles (A). Therefore, for the polymer (B), the description in the section under (2-1-2. Graft part) can be incorporated as appropriate, except for the matters described above.

### [4. Noise reduction agent]

### (4-1. Peak height of noise reduction agent)

### (Peak height of noise reduction agent)

The tan δ of the fine polymer particles (A) is a value calculated by the following formula (1): 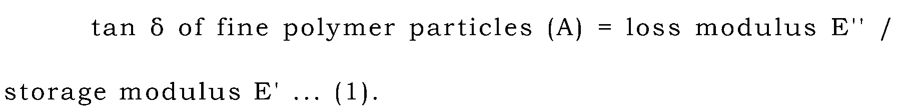 tan δ of fine polymer particles (A) = loss modulus E" / storage modulus E' ... (1).

In an embodiment of the present invention, the noise reduction agent has at least one peak top of tan δ in a temperature region of not lower than 10°C. The noise reduction agent may have two or more peak tops of tan δ in the temperature region of not lower than 10°C.

In an embodiment of the present invention, the lower limit of the maximum value of the peak height of tan δ in the temperature region of not lower than 10°C of the noise reduction agent is not less than 0.70, preferably not less than 0.75, more preferably not less than 0.80, even more preferably not less than 0.85, and particularly preferably not less than 0.90. The maximum value of the peak height of tan δ in the temperature region of not lower than 10°C of the noise reduction agent is preferably as large as possible. The upper limit of the maximum value of the peak height of tan δ in the temperature region of not lower than 10°C of the noise reduction agent may be, for example, not more than 3.00. In a case where the maximum value of the peak height of tan δ in the temperature region of not lower than 10°C of the noise reduction agent falls within the above range, there is an advantage that a friction material having high vibration absorption ability and reduced magnitude of generated noise can be obtained. In a case where the noise reduction agent has two or more peak tops of tan δ in the temperature region of not lower than 10°C, the height of the highest peak top is defined as the "peak height of tan δ in a temperature region of not lower than 10°C of the noise reduction agent".

The noise reduction agent may have at least one peak top of tan δ in a temperature region of not lower than 15°C, may have at least one peak top of tan δ in a temperature region of not lower than 20°C, may have at least one peak top of tan δ in a temperature region of not lower than 25°C, may have at least one peak top of tan δ in a temperature region of not lower than 30°C, may have at least one peak top of tan δ in a temperature region of not lower than 35°C, may have at least one peak top of tan δ in a temperature region of not lower than 40°C, may have at least one peak top of tan δ in a temperature region of not lower than 45°C, may have at least one peak top of tan δ in a temperature region of not lower than 50°C, may have at least one peak top of tan δ in a temperature region of not lower than 55°C, may have at least one peak top of tan δ in a temperature region of not lower than 60°C, may have at least one peak top of tan δ in a temperature region of not lower than 65°C, may have at least one peak top of tan δ in a temperature region of not lower than 70°C, may have at least one peak top of tan δ in a temperature region of not lower than 75°C, may have at least one peak top of tan δ in a temperature region of not lower than 80°C, may have at least one peak top of tan δ in a temperature region of not lower than 85°C, may have at least one peak top of tan δ in a temperature region of not lower than 90°C, or may have at least one peak top of tan δ in a temperature region of not lower than 95°C.

Further, the noise reduction agent may have at least one peak top of tan δ in a temperature region of not higher than 250°C, may have at least one peak top of tan δ in a temperature region of not higher than 200°C, may have at least one peak top of tan δ in a temperature region of not higher than 150°C, or may have at least one peak top of tan δ in a temperature region of not higher than 100°C.

### (4-2. Method for producing noise reduction agent)

In an embodiment of the present invention, a method for producing a noise reduction agent is not particularly limited. In an embodiment of the present invention, the method for producing a noise reduction agent includes a preparation step of preparing an aqueous latex containing the fine polymer particles (A), an agglutination step of preparing an agglutinate containing the fine polymer particles (A) using the obtained aqueous latex, and a collection step of collecting the agglutinate. In the present specification, "agglutination", "coagulation", and "solidification" have the same meaning and are interchangeable.

The preparation step is a step of obtaining an aqueous latex containing the fine polymer particles (A). A specific method for preparing the aqueous latex containing the fine polymer particles (A) is not particularly limited, and examples thereof include emulsion polymerization and suspension polymerization.

The agglutination step is a step for agglutinating the fine polymer particles (A) in the aqueous latex. In the agglutination step, an agglutinate containing the fine polymer particles (A) can be obtained. A method for agglutinating the fine polymer particles (A) is not particularly limited, and, for example, a method using a solvent, a method using an agglutinant (also referred to as a coagulant or a solidifying agent), a method of spraying an aqueous latex containing the fine polymer particles (A), and the like can be used.

The agglutination step preferably includes a step of preparing an agglutinate containing the fine polymer particles (A) using an agglutinant. According to this configuration, since it is not necessary to use a solvent, a powdery and/or granular material for a friction material with a small environmental load can be obtained. Further, according to this configuration, since a special facility for spraying is not required, a powdery and/or granular material for a friction material can be easily obtained.

The collection step is a step of removing water in the aqueous latex to obtain an agglutinate containing the fine polymer particles (A). The collection step can also be rephrased as a step of separating the agglutinate containing the fine polymer particles (A) and a water component from the aqueous latex. The water component is a mixture containing water as a main component, but also containing an emulsifier, unagglutinated fine polymer particles (A), and the like. A method for collecting the agglutinate containing the fine polymer particles (A) is not particularly limited, and examples thereof include methods such as filtration and centrifugation.

The agglutinate obtained through the agglutination step and the collection step described above can be used as a noise reduction agent.

In an embodiment of the present invention, the method for producing the noise reduction agent may further include a washing step.

The washing step is a step of washing the agglutinate, obtained in the collection step, containing the fine polymer particles (A). By washing the agglutinate, a powdery and/or granular material for a friction material having a low content of impurities and the like can be obtained. In the washing step, it is more preferable to wash the agglutinate with water, and it is even more preferable to wash the agglutinate with ion-exchanged water or pure water.

The washing step only needs to be a step of washing the agglutinate, and a specific method is not particularly limited. Examples of the specific method of the washing step include: a method of mixing the agglutinate and water and stirring the mixture with a stirrer; a method of kneading the agglutinate and water using a kneader; a method of mixing the agglutinate and water with a planetary centrifugal mixer; a method of spraying water onto the agglutinate; and a method of cake washing with a pressure filter. As the kneader, various types of kneaders such as a batch kneader, a continuous kneader, an extrusion kneader, and an extruder can be used.

An object to be washed is intended to be general impurities contained in the agglutinate, and is not particularly limited. Examples of the object include impurities derived from an emulsifier (for example, a phosphorus-based emulsifier, a sulfonic acid-based emulsifier), and, when an agglutinant described later is used, impurities derived from the agglutinant.

In an embodiment of the present invention, the method for producing the noise reduction agent may further include a drying step. By drying the noise reduction agent obtained in the above-described method, a noise reduction agent which is a powdery and/or granular material can be obtained. In other words, the present noise reduction agent may be a powdery and/or granular material.

The drying step is a step of drying the agglutinate, obtained in the collection step or the washing step, containing the fine polymer particles (A) to obtain a powdery and/or granular material. A method for drying the agglutinate is not particularly limited, and examples thereof include a method of drying the agglutinate using a dryer, a method of charging the agglutinate into a container and heating and depressurizing the inside of the container, and a method of charging the agglutinate into a container and bringing a dry gas and the agglutinate into countercurrent contact in the container.

In the above-described method for producing a noise reduction agent including the preparation step, the agglutination step, and the collection step, a case where the non-grafted polymer obtained during the production of the fine polymer particles (A) is not removed from the aqueous latex of the fine polymer particles (A), and a separately prepared polymer is not blended (hereinafter also referred to as "Case D") will be described. In Case D, the obtained noise reduction agent can contain the polymer (B) derived only from the non-grafted polymer. In Case D, the amounts of the fine polymer particles (A) and the polymer (B) in the noise reduction agent can be measured by the following method: (1) mixing the noise reduction agent with 50 mL of MEK to prepare a MEK solution; (2) subsequently separating the obtained MEK solution into a MEK-soluble part and a MEK-insoluble part; (3) further mixing the MEK-soluble part with methanol to obtain a mixture; (4) then adding an aqueous calcium chloride solution, which has been obtained by dissolving 0.01 g of calcium chloride in water, to the obtained mixture and stirring the obtained mixture for 1 hour; and (5) thereafter separating the obtained mixture into a methanol-soluble part and a methanol-insoluble part. The amount of the MEK-insoluble part in the noise reduction agent thus obtained can represent the amount of the fine polymer particles (A) in the noise reduction agent. The amount of the methanol-insoluble part (MEK-soluble part and methanol-insoluble part) in the noise reduction agent thus obtained can represent the amount of the polymer (B) in the noise reduction agent.

### [5. Resin composition for friction material]

A resin composition for a friction material containing the noise reduction agent described above is also an embodiment of the present invention. According to the present composition, a friction material with reduced noise can be provided.

### (5-1. Resin)

The present composition may contain a resin in addition to the noise reduction agent described above. The resin in the present composition can function as a binder.

The resin is not particularly limited, and examples thereof include a thermosetting resin, a thermoplastic resin, or any combination of a thermosetting resin and a thermoplastic resin. Due to having an advantage of heat resistance, the resin is more preferably a thermosetting resin such as a phenol-based resin, an epoxy-based resin, a polyimide-based resin, or an oxetane-based resin, or a thermoplastic resin such as a polycarbonate-based resin.

The resin preferably contains at least a phenol-based resin. The phenol-based resin is not particularly limited, and various phenol-based resins can be used. Specific examples of the phenol-based resin include (i) novolac-type phenol-based resins obtained by condensing or co-condensing phenols and/or naphthols with a compound having an aldehyde group in the presence of an acidic catalyst (such as, for example, novolac-type cresol-modified phenol-based resins and novolac-type bisphenol-modified phenol-based resins), (ii) resol-type phenol-based resins obtained by condensing or co-condensing phenols and/or naphthols with a compound having an aldehyde group in the presence of an alkaline acidic catalyst (such as, for example, resol-type cresol-modified phenol-based resins and resol-type bisphenol-modified phenol-based resins), (iii) aralkyl-type phenol-based resins synthesized from phenols and/or naphthols and dimethoxyparaxylene or bis(methoxymethyl)biphenyl (such as, for example, phenol-aralkyl resins, naphthol-aralkyl resins, and biphenyl-type phenol-aralkyl resins), biphenyl-modified phenol-based resins, melamine-modified phenol-based resins, and guanamine-modified phenol-based resins, and (iv) thermosetting resins having a benzoxazine ring synthesized from phenols, aldehydes, and aromatic amines. Examples of the phenols include phenol, cresol, resorcinol, catechol, bisphenol A, bisphenol F, phenylphenol, and aminophenol. Examples of the naphthols include α-naphthol, β-naphthol, and dihydroxynaphthalene. Examples of the compound having an aldehyde group include formaldehyde. These phenol-based resins may be used alone or in combination of two or more thereof. Among these phenol-based resins, novolac-type phenol-based resins are preferable from the viewpoint of production stability and cost.

The softening point of the phenol-based resin is preferably 80°C to 120°C, and more preferably 90°C to 110°C.

The resin preferably contains not less than 50% by weight, more preferably not less than 60% by weight, more preferably not less than 70% by weight, more preferably not less than 80% by weight, even more preferably not less than 90% by weight, and particularly preferably not less than 95% by weight of the phenol-based resin in 100% by weight of the resin.

### (5-2. Ratio between content of noise reduction agent and content of resin)

In the present composition, the ratio (content ratio) between the content of the noise reduction agent and the content of the resin is usually preferably 0.5% by weight to 50.0% by weight of the noise reduction agent and 50.0% by weight to 99.5% by weight of the resin, more preferably 1.0% by weight to 40.0% by weight of the noise reduction agent and 60.0% by weight to 99.0% by weight of the resin, more preferably 1.0% by weight to 25.0% by weight of the noise reduction agent and 75.0% by weight to 99.0% by weight of the resin, and particularly preferably 2.5% by weight to 20.0% by weight of the noise reduction agent and 80.0% by weight to 97.5% by weight of the resin, when the total of the noise reduction agent and the resin is 100% by weight.

The content ratio between the noise reduction agent and the resin can be appropriately set according to, for example, (a) water content and content of components other than the fine polymer particles (A) contained in the noise reduction agent and (b) a method of mixing the noise reduction agent and the resin, for the purpose of setting the ratio between the content of the fine polymer particles (A) and the content of the resin in the obtained composition to a desired value.

In the present composition, the ratio (content ratio) between the content of the fine polymer particles (A) and the content of the resin is usually preferably 0.5% by weight to 50.0% by weight of the fine polymer particles (A) and 50.0% by weight to 99.5% by weight of the resin, more preferably 1.0% by weight to 40.0% by weight of the fine polymer particles (A) and 60.0% by weight to 99.0% by weight of the resin, more preferably 1.0% by weight to 25.0% by weight of the fine polymer particles (A) and 75.0% by weight to 99.0% by weight of the resin, and particularly preferably 2.5% by weight to 20.0% by weight of the fine polymer particles (A) and 80.0% by weight to 97.5% by weight of the resin, when the total of the fine polymer particles (A) and the resin is 100% by weight.

### (5-3. Other optional components)

The present composition may contain, as necessary, other optional component(s) which is different from the above-mentioned components. Examples of other optional component(s) include reinforcing materials (steel, wool, aramid fiber, acrylic fiber, ceramic wool, copper, brass fiber, asbestos, etc.), friction modifiers (rubber (NBR, SBR, etc.), cashew-based dust, metal powder (copper, brass, etc.), abrasives, inorganic fillers (barium sulfate, mica, etc.), etc.), lubricants (graphite, antimony sulfide, tin sulfide, composite metal sulfide, molybdenum disulfide, etc.), curing agents, colorants such as pigments and dyes, extender pigments, pigment dispersants, ultraviolet absorbers, antioxidants described above, heat stabilizers (anti-gelling agents), plasticizers, leveling agents, antifoaming agents, silane coupling agents, antistatic agents, flame retardants, viscosity reducers, viscosity modifiers, thixotropy imparting agents, shrinkage reducing agents, organic fillers, thermoplastic resins, desiccants, dispersants, thermal conductivity improvers, water binders, anti-sagging agents, anti-color separation agents, anti-settling agents, coating film wear regulating agents, surface control agents, monobasic organic acids, camphor, and castor oil. The other optional components may be used alone or in combination of two or more.

### (5-4. Method for producing resin composition for friction material)

A method for producing a resin composition for a friction material in accordance with an embodiment of the present invention is a method for producing a resin composition for a friction material including a step of mixing a noise reduction agent containing fine polymer particles (A) and optionally a resin and other optional component(s). The noise reduction agent containing the fine polymer particles (A) can be produced by the production method described in the section under (2-1-5. Method for producing fine polymer particles (A)) mentioned above.

The method for producing the present composition is not particularly limited, provided that the method is a method for producing a composition including a step of mixing a noise reduction agent containing fine polymer particles (A) and optionally a resin and other optional component(s). Examples of the method for producing the present composition include a method of mixing a noise reduction agent and a thermosetting resin, then adding the above-mentioned other optional component(s) to the obtained mixture as necessary, and mixing with a mixer or the like. The order of adding the noise reduction agent, the thermosetting resin, and other optional component(s) is not limited to the above order, and may be any order.

The method for producing a resin composition for a friction material in accordance with an embodiment of the present invention is more preferably a method for producing a resin composition for a friction material including a step of mixing a noise reduction agent containing fine polymer particles (A) and a phenol-based resin. Also in the production method including the step of mixing the noise reduction agent containing the fine polymer particles (A) and the phenol-based resin, the order of adding the noise reduction agent, the phenol-based resin, and other optional component(s) may be any order. Examples of the above-mentioned mixing method include a method of mixing the noise reduction agent and the phenol-based resin, then adding the above-mentioned other optional component(s) as necessary, and mixing with a mixer or the like.

The temperature when mixing the noise reduction agent and the resin is generally set to a temperature at which the resin can flow.

### [6. Friction material]

A friction material in accordance with an embodiment of the present invention contains the above-described noise reduction agent or the above-described composition. The friction material in accordance with an embodiment of the present invention contains the composition having the above configuration, and thus has an advantage of being capable of reducing noise.

The present friction material is not particularly limited, and examples thereof include a brake pad and a clutch.

The present friction material can be produced using the noise reduction agent or the composition. A method for producing the present friction material is not particularly limited, and a known method can be used.

An embodiment of the present invention encompasses the inventions described in <1> to <13> below.
<1> A noise reduction agent including fine polymer particles (A), wherein:
   the fine polymer particles (A) include a core part and a graft part grafted to the core part;
   the noise reduction agent has a peak top of tan δ in a temperature region of not lower than 10°C; and
   a maximum value of a peak height of tan δ in the temperature region of not lower than 10°C is not less than 0.70.
<2> The noise reduction agent described in <1>, wherein the core part contains at least one type selected from the group consisting of diene-based rubbers, (meth)acrylate-based rubbers, and organosiloxane-based rubbers.
<3> The noise reduction agent described in <1> or <2>, wherein the core part is at least one type selected from the group consisting of butadiene rubbers, butadiene-styrene rubbers, and butyl acrylate rubbers.
<4> The noise reduction agent described in any of <1> to <3>, wherein the graft part contains at least one type of structural unit selected from the group consisting of an aromatic vinyl unit, a vinyl cyanide unit, and a (meth)acrylate unit.
<5> The noise reduction agent described in any of <1> to <4>, wherein a proportion of the graft part in the fine polymer particles (A) is 20% by weight to 90% by weight in 100% by weight of the fine polymer particles (A).
<6> The noise reduction agent described in any of <1> to <5>, wherein a proportion of an unsubstituted vinyl aromatic unit and/or a vinyl-substituted aromatic unit in the graft part is more than 70% by weight and not more than 100% by weight in 100% by weight of the graft part.
<7> The noise reduction agent described in any of <1> to <6>, wherein a volume-average particle size of the fine polymer particles (A) is 0.10 µm to 10.00 µm.
<8> A noise reduction agent including fine polymer particles (A), wherein:
   the fine polymer particles (A) include a core part and a graft part grafted to the core part;
   a proportion of the graft part in the fine polymer particles (A) is 20% by weight to 90% by weight in 100% by weight of the fine polymer particles (A); and
   a proportion of an unsubstituted vinyl aromatic unit and/or a vinyl-substituted aromatic unit in the graft part is more than 70% by weight and not more than 100% by weight in 100% by weight of the graft part.
<9> The noise reduction agent described in <8>, wherein the core part contains at least one type selected from the group consisting of diene-based rubbers, (meth)acrylate-based rubbers, and organosiloxane-based rubbers.
<10> The noise reduction agent described in <8> or <9>, wherein the core part is at least one type selected from the group consisting of butadiene rubbers, butadiene-styrene rubbers, and butyl acrylate rubbers.
<11> A resin composition for a friction material, including the noise reduction agent described in <1> or <8>.
<12> The resin composition described in <11>, further including a phenol-based resin.
<13> A friction material including the resin composition described in <11> or <12>.

### Examples

The present invention will be described more specifically with reference to the following Examples and Comparative Examples, but the present invention is not limited thereto, and Examples obtained by appropriately combining technical means disclosed in each Example are also included in the scope of the present invention.

### [Measurement method and evaluation method]

### 1. Volume-average particle size of fine polymer particles (A)

The volume-average particle size (Mv) of fine polymer particles (A) dispersed in an aqueous latex was measured using Nanotrac Wave II-EX150 (manufactured by MicrotracBEL Corp.). The aqueous latex diluted with deionized water was used as a measurement specimen. The measurement was carried out by inputting the refractive indices of water and each fine polymer particle, setting a measurement time to 120 seconds, and adjusting the concentration of the specimen such that a load index fell within the range of 1 to 10.

### 2. Peak temperature and peak height of tan δ of noise reduction agent

The peak temperature and peak height of tan δ were measured by the following method: (1) a flat plate having a thickness of 1 mm was formed by pressing each powdery and/or granular material (noise reduction agent) under conditions where a uniform flat plate was obtained; (2) dynamic viscoelasticity measurement was carried out on the obtained flat plate under tensile conditions using a dynamic viscoelasticity measurement device (for example, DVA-200 manufactured by IT Keisoku Seigyo Kabushikigaisha) to obtain a graph of tan δ; and (3) from the obtained graph, the peak temperature and peak height of tan δ in the range of not lower than 0°C to not higher than 200°C of each sample were calculated.

### 3. Pyrolytic property

The pyrolytic property was defined as a temperature at which 5% weight loss occurred, as determined by analyzing each powdery and/or granular material (noise reduction agent) by simultaneous thermogravimetric and differential thermal analysis (TG-DTA) (for example, STA-700 manufactured by Hitachi High-Tech Corporation).

### 4. Measurement of noise of brake pad and noise reduction effect of noise reduction agent

A friction material (brake pad) was prepared with use of the resin composition for a friction material obtained in the section under "4. Peak height of tan δ of resin composition for friction material". Noise was measured for the obtained brake pad, and the noise reduction effect of the noise reduction agent was evaluated on a scale of three grades as follows. A case where the noise reduction effect was excellent was rated as "2", a case where the noise reduction effect was good was rated as "1", and a case where the noise reduction effect was poor was rated as "0".

### [Noise reduction agent]

### [Example 1: Method for producing powdery and/or granular material (P-1)]

### (Production Example 1-1: Preparation of aqueous latex (R-1))

Into a glass reaction vessel were introduced 233 parts by mass of deionized water, 0.006 parts by mass of EDTA, 0.0015 parts by mass of ferrous sulfate heptahydrate, 0.2 parts by mass of SFS, and 0.15 parts by mass of SDBS. Here, the glass reaction vessel was equipped with a thermometer, a stirrer, a reflux condenser, a nitrogen inlet, and a device for adding monomers and emulsifiers. While gas in the glass reaction vessel was replaced with nitrogen (that is, in a nitrogen stream), the introduced raw materials were stirred at 60°C. Next, a mixture of 79 parts by mass of butyl acrylate (BA), 2 parts by mass of allyl methacrylate (ALMA), and 0.021 parts by mass of cumene hydroperoxide (CHP) was continuously added dropwise into the glass reaction vessel over 175 minutes. After completion of the addition, stirring of the mixture in the glass reaction vessel was continued for another 0.5 hours to complete the polymerization. By the above operation, a core part was formed, and an aqueous latex (R-1) containing the core part was obtained. In the obtained core part, allyl methacrylate is used in a small amount and has a small influence on the glass transition temperature of the core part, and thus can be ignored in the examination of the glass transition temperature. Thus, the glass transition temperature of the core part of the aqueous latex (R-1) can be regarded as -54°C, which is the same as the glass transition temperature of a homopolymer of butyl acrylate.

### (Production Example 2-1: Preparation of aqueous latex (L-1))

Into the glass reaction vessel that contains the aqueous latex (R-1) obtained in Production Example 1-1, a mixture of 18.9 parts by mass of methyl methacrylate (MMA), 2.1 parts by mass of BA, and 0.05 parts by mass of CHP was continuously added over 200 minutes. After completion of the addition, 0.04 parts by mass of CHP was added into the glass reaction vessel, and stirring of the mixture in the glass reaction vessel was continued for another 1 hour to complete the polymerization. By the above operation, a graft part grafted to the crosslinked core part was formed, and an aqueous latex (L-1) containing fine polymer particles (A) was obtained. Not less than 99% by weight of the monomer component had been polymerized. The volume-average particle size of the fine polymer particles (A) contained in the obtained aqueous latex (L-1) was 0.25 µm.

### (Production Example 3-1: Production of powdery and/or granular material (P-1))

333 parts by weight of the obtained aqueous latex (L-1) and 2 parts by weight of Irganox 1135 were mixed. The obtained mixture was introduced into 600 parts by weight of ion-exchanged water having 4 parts by weight of calcium chloride dissolved therein and having a temperature adjusted to 70°C to agglutinate the fine polymer particles (A). Thereafter, the obtained mixture was filtered to obtain a wet powder. Further, an operation of introducing the obtained wet powder into 500 parts by weight of ion-exchanged water and an operation of filtering the wet powder introduced into the ion-exchanged water were repeated for a total of two cycles. Finally, the wet powder was dried in a dryer at 50°C for 48 hours to obtain a powdery and/or granular material (P-1) (noise reduction agent).

### [Example 2: Method for producing powdery and/or granular material (P-2)]

### (Production Example 1-2: Preparation of aqueous latex (R-2))

Into a pressure-resistant polymerization vessel were introduced 200 parts by mass of deionized water, 0.03 parts by mass of tripotassium phosphate, 0.002 parts by mass of disodium ethylenediaminetetraacetate (EDTA), 0.001 parts by mass of ferrous sulfate heptahydrate, and 1.55 parts by mass of sodium dodecylbenzenesulfonate (SDBS) as an emulsifier. Next, while the introduced raw materials were stirred, gas in the pressure-resistant polymerization vessel was replaced with nitrogen, so that oxygen was sufficiently removed from the inside of the pressure-resistant polymerization vessel. After that, 100 parts by mass of butadiene (Bd) was introduced into the pressure-resistant polymerization vessel, and the temperature inside the pressure-resistant polymerization vessel was raised to 45°C. After that, 0.03 parts by mass of paramenthane hydroperoxide (PHP) was introduced into the pressure-resistant polymerization vessel, and then 0.1 parts by mass of sodium formaldehyde sulfoxylate (SFS) was introduced into the pressure-resistant polymerization vessel to start polymerization. At the time 15 hours had elapsed from the start of the polymerization, devolatilization was carried out under reduced pressure to remove, by devolatilization, residual monomers remaining without being used in the polymerization, thereby completing the polymerization. During the polymerization, PHP, EDTA, and ferrous sulfate heptahydrate were each added into the pressure-resistant polymerization vessel in discretionarily selected amounts and at discretionarily selected timings. By the above operation, a core part was formed, and a polybutadiene rubber latex (R-2) containing polybutadiene rubber as a main component was obtained. The volume-average particle size of the polybutadiene rubber contained in the obtained polybutadiene rubber latex (R-2) was 0.08 µm. The glass transition temperature of the core part in the polybutadiene rubber latex (R-2) is -80°C, which is the same as the glass transition temperature of the homopolymer of butadiene.

### (Production Example 2-2: Preparation of aqueous latex (L-2))

Into a glass reaction vessel were introduced 132 parts by mass of the polybutadiene rubber latex (R-2) obtained in Production Example 1-2 (containing 44 parts by mass of polybutadiene rubber particles) and 145 parts by mass of deionized water. Here, the glass reaction vessel was equipped with a thermometer, a stirrer, a reflux condenser, a nitrogen inlet, and a device for adding monomers. While gas in the glass reaction vessel was replaced with nitrogen, the introduced raw materials were stirred at 60°C. Next, 0.004 parts by mass of EDTA, 0.001 parts by mass of ferrous sulfate heptahydrate, and 0.2 parts by mass of SFS were added into the glass reaction vessel. Thereafter, a mixture of 56 parts by mass of styrene (St) and 0.04 parts by mass of CHP was continuously added into the glass reaction vessel over 85 minutes. After completion of the addition, 0.065 parts by mass of CHP was added into the glass reaction vessel, and stirring of the mixture in the glass reaction vessel was continued for another 1 hour to complete the polymerization. By the above operation, a graft part grafted to the crosslinked core part was formed, and an aqueous latex (L-2) containing fine polymer particles (A) was obtained. Not less than 99% by weight of the monomer component had been polymerized. The volume-average particle size of the fine polymer particles (A) contained in the obtained aqueous latex (L-2) was 0.10 µm.

### (Production Example 3-2: Production of powdery and/or granular material (P-2))

333 parts by weight of the obtained aqueous latex (L-2) and 2 parts by weight of Irganox 1135 were mixed. The obtained mixture was introduced into 600 parts by weight of ion-exchanged water having 4 parts by weight of calcium chloride dissolved therein and having a temperature adjusted to 70°C to agglutinate the fine polymer particles (A). Thereafter, the obtained mixture was filtered to obtain a wet powder. Further, an operation of introducing the obtained wet powder into 500 parts by weight of ion-exchanged water and an operation of filtering the wet powder introduced into the ion-exchanged water were repeated for a total of two cycles. Finally, the wet powder was dried in a dryer at 50°C for 48 hours to obtain a powdery and/or granular material (P-2) (noise reduction agent).

### [Example 3: Method for producing powdery and/or granular material (P-3)]

### (Production Example 1-3: Preparation of polybutadiene rubber latex (R-3))

Into a pressure-resistant polymerization vessel were introduced 21 parts by mass of the polybutadiene rubber latex (R-2) obtained in Production Example 1-2 (containing 7 parts by mass of polybutadiene rubber), 185 parts by mass of deionized water, 0.03 parts by mass of tripotassium phosphate, 0.002 parts by mass of EDTA, and 0.001 parts by mass of ferrous sulfate heptahydrate. Next, while the introduced raw materials were stirred, gas in the pressure-resistant polymerization vessel was replaced with nitrogen, so as to sufficiently remove oxygen from the inside of the pressure-resistant polymerization vessel. After that, 93 parts by mass of Bd was introduced into the pressure-resistant polymerization vessel, and the temperature inside the pressure-resistant polymerization vessel was raised to 45°C. After that, 0.02 parts by mass of PHP was introduced into the pressure-resistant polymerization vessel, and then 0.1 parts by mass of SFS was introduced into the pressure-resistant polymerization vessel to start polymerization. At the time 30 hours had elapsed from the start of the polymerization, devolatilization was carried out under reduced pressure to remove, by devolatilization, residual monomers remaining without being used in the polymerization, thereby completing the polymerization. During the polymerization, PHP, EDTA, ferrous sulfate heptahydrate, and SDBS were each added into the pressure-resistant polymerization vessel in discretionarily selected amounts and at discretionarily selected timings. By the above operation, a core part was formed, and a polybutadiene rubber latex (R-3) which contained a core part containing polybutadiene rubber as a main component was obtained. The volume-average particle size of the core part contained in the obtained polybutadiene rubber latex (R-3) was 0.19 µm. The glass transition temperature of the core part in this aqueous latex is -80°C.

### (Production Example 2-3: Preparation of aqueous latex (L-3))

Into a glass reaction vessel were introduced 132 parts by mass of the polybutadiene rubber latex (R-3) obtained in Production Example 1-3 (containing 44 parts by mass of polybutadiene rubber particles) and 145 parts by mass of deionized water. Here, the glass reaction vessel was equipped with a thermometer, a stirrer, a reflux condenser, a nitrogen inlet, and a device for adding monomers. While gas in the glass reaction vessel was replaced with nitrogen, the introduced raw materials were stirred at 60°C. Next, 0.004 parts by mass of EDTA, 0.001 parts by mass of ferrous sulfate heptahydrate, and 0.2 parts by mass of SFS were added into the glass reaction vessel. Thereafter, a mixture of 56 parts by mass of styrene (St) and 0.04 parts by mass of CHP was continuously added into the glass reaction vessel over 85 minutes. After completion of the addition, 0.065 parts by mass of CHP was added into the glass reaction vessel, and stirring of the mixture in the glass reaction vessel was continued for another 1 hour to complete the polymerization. By the above operation, a graft part grafted to the crosslinked core part was formed, and an aqueous latex (L-3) containing fine polymer particles (A) was obtained. Not less than 99% by weight of the monomer component had been polymerized. The volume-average particle size of the fine polymer particles (A) contained in the obtained aqueous latex (L-3) was 0.20 µm.

### (Production Example 3-3: Production of powdery and/or granular material (P-3))

333 parts by weight of the obtained aqueous latex (L-3) and 2 parts by weight of Irganox 1135 were mixed. The obtained mixture was introduced into 600 parts by weight of ion-exchanged water having 4 parts by weight of calcium chloride dissolved therein and having a temperature adjusted to 70°C to agglutinate the fine polymer particles (A). Thereafter, the obtained mixture was filtered to obtain a wet powder. Further, an operation of introducing the obtained wet powder into 500 parts by weight of ion-exchanged water and an operation of filtering the wet powder introduced into the ion-exchanged water were repeated for a total of two cycles. Finally, the wet powder was dried in a dryer at 50°C for 48 hours to obtain a powdery and/or granular material (P-3) (noise reduction agent).

### [Example 4: Method for producing powdery and/or granular material (P-4)]

### (Production Example 2-4: Preparation of aqueous latex (L-4))

Into a glass reaction vessel were introduced 90 parts by mass of the polybutadiene rubber latex (R-3) obtained in Production Example 1-3 (containing 30 parts by mass of polybutadiene rubber particles) and 173 parts by mass of deionized water. Here, the glass reaction vessel was equipped with a thermometer, a stirrer, a reflux condenser, a nitrogen inlet, and a device for adding monomers. While gas in the glass reaction vessel was replaced with nitrogen, the introduced raw materials were stirred at 60°C. Next, 0.004 parts by mass of EDTA, 0.001 parts by mass of ferrous sulfate heptahydrate, and 0.2 parts by mass of SFS were added into the glass reaction vessel. Thereafter, a mixture of 70 parts by mass of styrene (St) and 0.04 parts by mass of CHP was continuously added into the glass reaction vessel over 85 minutes. After completion of the addition, 0.065 parts by mass of CHP was added into the glass reaction vessel, and stirring of the mixture in the glass reaction vessel was continued for another 1 hour to complete the polymerization. By the above operation, a graft part grafted to the crosslinked core part was formed, and an aqueous latex (L-4) containing fine polymer particles (A) was obtained. Not less than 99% by weight of the monomer component had been polymerized. The volume-average particle size of the fine polymer particles (A) contained in the obtained aqueous latex (L-4) was 0.20 µm.

### (Production Example 3-4: Production of powdery and/or granular material (P-4))

333 parts by weight of the obtained aqueous latex (L-4) and 2 parts by weight of Irganox 1135 were mixed. The obtained mixture was introduced into 600 parts by weight of ion-exchanged water having 4 parts by weight of calcium chloride dissolved therein and having a temperature adjusted to 70°C to agglutinate the fine polymer particles (A). Thereafter, the obtained mixture was filtered to obtain a wet powder. Further, an operation of introducing the obtained wet powder into 500 parts by weight of ion-exchanged water and an operation of filtering the wet powder introduced into the ion-exchanged water were repeated for a total of two cycles. Finally, the wet powder was dried in a dryer at 50°C for 48 hours to obtain a powdery and/or granular material (P-4) (noise reduction agent).

### [Example 5: Method for producing powdery and/or granular material (P-5)]

### (Production Example 2-5: Preparation of aqueous latex (L-5))

Into a glass reaction vessel were introduced 60 parts by mass of the polybutadiene rubber latex (R-3) obtained in Production Example 1-3 (containing 20 parts by mass of polybutadiene rubber particles) and 193 parts by mass of deionized water. Here, the glass reaction vessel was equipped with a thermometer, a stirrer, a reflux condenser, a nitrogen inlet, and a device for adding monomers. While gas in the glass reaction vessel was replaced with nitrogen, the introduced raw materials were stirred at 60°C. Next, 0.004 parts by mass of EDTA, 0.001 parts by mass of ferrous sulfate heptahydrate, and 0.2 parts by mass of SFS were added into the glass reaction vessel. Thereafter, a mixture of 80 parts by mass of styrene (St) and 0.04 parts by mass of CHP was continuously added into the glass reaction vessel over 85 minutes. After completion of the addition, 0.065 parts by mass of CHP was added into the glass reaction vessel, and stirring of the mixture in the glass reaction vessel was continued for another 1 hour to complete the polymerization. By the above operation, a graft part grafted to the crosslinked core part was formed, and an aqueous latex (L-5) containing fine polymer particles (A) was obtained. Not less than 99% by weight of the monomer component had been polymerized. The volume-average particle size of the fine polymer particles (A) contained in the obtained aqueous latex (L-5) was 0.20 µm.

### (Production Example 3-5: Production of powdery and/or granular material (P-5))

333 parts by weight of the obtained aqueous latex (L-5) and 2 parts by weight of Irganox 1135 were mixed. The obtained mixture was introduced into 600 parts by weight of ion-exchanged water having 4 parts by weight of calcium chloride dissolved therein and having a temperature adjusted to 70°C to agglutinate the fine polymer particles (A). Thereafter, the obtained mixture was filtered to obtain a wet powder. Further, an operation of introducing the obtained wet powder into 500 parts by weight of ion-exchanged water and an operation of filtering the wet powder introduced into the ion-exchanged water were repeated for a total of two cycles. Finally, the wet powder was dried in a dryer at 50°C for 48 hours to obtain a powdery and/or granular material (P-5) (noise reduction agent).

### [Example 6: Method for producing powdery and/or granular material (P-6)]

### (Production Example 2-6: Preparation of aqueous latex (L-6))

Into a glass reaction vessel were introduced 132 parts by mass of the polybutadiene rubber latex (R-3) obtained in Production Example 1-3 (containing 44 parts by mass of polybutadiene rubber particles) and 145 parts by mass of deionized water. Here, the glass reaction vessel was equipped with a thermometer, a stirrer, a reflux condenser, a nitrogen inlet, and a device for adding monomers. While gas in the glass reaction vessel was replaced with nitrogen, the introduced raw materials were stirred at 60°C. Next, 0.004 parts by mass of EDTA, 0.001 parts by mass of ferrous sulfate heptahydrate, and 0.2 parts by mass of SFS were added into the glass reaction vessel. Thereafter, a mixture of 53.2 parts by mass of styrene (St), 2.8 parts by mass of butyl acrylate, and 0.04 parts by mass of CHP was continuously added into the glass reaction vessel over 85 minutes. After completion of the addition, 0.065 parts by mass of CHP was added into the glass reaction vessel, and stirring of the mixture in the glass reaction vessel was continued for another 1 hour to complete the polymerization. By the above operation, a graft part grafted to the crosslinked core part was formed, and an aqueous latex (L-6) containing fine polymer particles (A) was obtained. Not less than 99% by weight of the monomer component had been polymerized. The volume-average particle size of the fine polymer particles (A) contained in the obtained aqueous latex (L-6) was 0.20 µm.

### (Production Example 3-6: Production of powdery and/or granular material (P-6))

333 parts by weight of the obtained aqueous latex (L-6) and 2 parts by weight of Irganox 1135 were mixed. The obtained mixture was introduced into 600 parts by weight of ion-exchanged water having 4 parts by weight of calcium chloride dissolved therein and having a temperature adjusted to 70°C to agglutinate the fine polymer particles (A). Thereafter, the obtained mixture was filtered to obtain a wet powder. Further, an operation of introducing the obtained wet powder into 500 parts by weight of ion-exchanged water and an operation of filtering the wet powder introduced into the ion-exchanged water were repeated for a total of two cycles. Finally, the wet powder was dried in a dryer at 50°C for 48 hours to obtain a powdery and/or granular material (P-6) (noise reduction agent).

### [Example 7: Method for producing powdery and/or granular material (P-7)]

### (Production Example 2-7: Preparation of aqueous latex (L-7))

Into a glass reaction vessel were introduced 90 parts by mass of the polybutadiene rubber latex (R-3) obtained in Production Example 1-3 (containing 30 parts by mass of polybutadiene rubber particles) and 173 parts by mass of deionized water. Here, the glass reaction vessel was equipped with a thermometer, a stirrer, a reflux condenser, a nitrogen inlet, and a device for adding monomers. While gas in the glass reaction vessel was replaced with nitrogen, the introduced raw materials were stirred at 60°C. Next, 0.004 parts by mass of EDTA, 0.001 parts by mass of ferrous sulfate heptahydrate, and 0.2 parts by mass of SFS were added into the glass reaction vessel. Thereafter, a mixture of 32.5 parts by mass of styrene (St), 32.5 parts by mass of BA, and 0.04 parts by mass of CHP was continuously added into the glass reaction vessel over 85 minutes. After completion of the addition, 0.065 parts by mass of CHP was added into the glass reaction vessel, and stirring of the mixture in the glass reaction vessel was continued for another 1 hour to complete the polymerization. Thereafter, a mixture of 5 parts by mass of styrene (St) and 0.01 parts by mass of CHP was continuously added into the glass reaction vessel over 15 minutes. After completion of the addition, 0.065 parts by mass of CHP was added into the glass reaction vessel, and stirring of the mixture in the glass reaction vessel was continued for another 1 hour to complete the polymerization. By the above operation, a graft part grafted to the crosslinked core part was formed, and an aqueous latex (L-7) containing fine polymer particles (A) was obtained. Not less than 99% by weight of the monomer component had been polymerized. The volume-average particle size of the fine polymer particles (A) contained in the obtained aqueous latex (L-7) was 0.20 µm.

### (Production Example 3-7: Production of powdery and/or granular material (P-7))

333 parts by weight of the obtained aqueous latex (L-7) and 2 parts by weight of Irganox 1135 were mixed. The obtained mixture was introduced into 600 parts by weight of ion-exchanged water having 4 parts by weight of calcium chloride dissolved therein and having a temperature adjusted to 70°C to agglutinate the fine polymer particles (A). Thereafter, the obtained mixture was filtered to obtain a wet powder. Further, an operation of introducing the obtained wet powder into 500 parts by weight of ion-exchanged water and an operation of filtering the wet powder introduced into the ion-exchanged water were repeated for a total of two cycles. Finally, the wet powder was dried in a dryer at 50°C for 48 hours to obtain a powdery and/or granular material (P-7) (noise reduction agent).

### [Example 8: Method for producing powdery and/or granular material (P-8)]

### (Production Example 2-8: Preparation of aqueous latex (L-8))

Into a glass reaction vessel were introduced 90 parts by mass of the polybutadiene rubber latex (R-3) obtained in Production Example 1-3 (containing 30 parts by mass of polybutadiene rubber particles) and 173 parts by mass of deionized water. Here, the glass reaction vessel was equipped with a thermometer, a stirrer, a reflux condenser, a nitrogen inlet, and a device for adding monomers. While gas in the glass reaction vessel was replaced with nitrogen, the introduced raw materials were stirred at 60°C. Next, 0.004 parts by mass of EDTA, 0.001 parts by mass of ferrous sulfate heptahydrate, and 0.2 parts by mass of SFS were added into the glass reaction vessel. Thereafter, a mixture of 26 parts by mass of styrene (St), 39 parts by mass of BA, and 0.04 parts by mass of CHP was continuously added into the glass reaction vessel over 85 minutes. After completion of the addition, 0.065 parts by mass of CHP was added into the glass reaction vessel, and stirring of the mixture in the glass reaction vessel was continued for another 1 hour to complete the polymerization. Thereafter, a mixture of 5 parts by mass of styrene (St) and 0.01 parts by mass of CHP was continuously added into the glass reaction vessel over 15 minutes. After completion of the addition, 0.065 parts by mass of CHP was added into the glass reaction vessel, and stirring of the mixture in the glass reaction vessel was continued for another 1 hour to complete the polymerization. By the above operation, a graft part grafted to the crosslinked core part was formed, and an aqueous latex (L-8) containing fine polymer particles (A) was obtained. Not less than 99% by weight of the monomer component had been polymerized. The volume-average particle size of the fine polymer particles (A) contained in the obtained aqueous latex (L-8) was 0.20 µm.

### (Production Example 3-8: Production of powdery and/or granular material (P-8))

333 parts by weight of the obtained aqueous latex (L-8) and 2 parts by weight of Irganox 1135 were mixed. The obtained mixture was introduced into 600 parts by weight of ion-exchanged water having 4 parts by weight of calcium chloride dissolved therein and having a temperature adjusted to 70°C to agglutinate the fine polymer particles (A). Thereafter, the obtained mixture was filtered to obtain a wet powder. Further, an operation of introducing the obtained wet powder into 500 parts by weight of ion-exchanged water and an operation of filtering the wet powder introduced into the ion-exchanged water were repeated for a total of two cycles. Finally, the wet powder was dried in a dryer at 50°C for 48 hours to obtain a powdery and/or granular material (P-8) (noise reduction agent).

### [Example 9: Method for producing powdery and/or granular material (P-9)]

### (Production Example 2-9: Preparation of aqueous latex (L-9))

Into a glass reaction vessel were introduced 90 parts by mass of the polybutadiene rubber latex (R-3) obtained in Production Example 1-3 (containing 30 parts by mass of polybutadiene rubber particles) and 173 parts by mass of deionized water. Here, the glass reaction vessel was equipped with a thermometer, a stirrer, a reflux condenser, a nitrogen inlet, and a device for adding monomers. While gas in the glass reaction vessel was replaced with nitrogen, the introduced raw materials were stirred at 60°C. Next, 0.004 parts by mass of EDTA, 0.001 parts by mass of ferrous sulfate heptahydrate, and 0.2 parts by mass of SFS were added into the glass reaction vessel. Thereafter, a mixture of 29.5 parts by mass of styrene (St), 30.5 parts by mass of BA, and 0.04 parts by mass of CHP was continuously added into the glass reaction vessel over 85 minutes. After completion of the addition, 0.065 parts by mass of CHP was added into the glass reaction vessel, and stirring of the mixture in the glass reaction vessel was continued for another 1 hour to complete the polymerization. Thereafter, a mixture of 10 parts by mass of styrene (St) and 0.01 parts by mass of CHP was continuously added into the glass reaction vessel over 15 minutes. After completion of the addition, 0.065 parts by mass of CHP was added into the glass reaction vessel, and stirring of the mixture in the glass reaction vessel was continued for another 1 hour to complete the polymerization. By the above operation, a graft part grafted to the crosslinked core part was formed, and an aqueous latex (L-9) containing fine polymer particles (A) was obtained. Not less than 99% by weight of the monomer component had been polymerized. The volume-average particle size of the fine polymer particles (A) contained in the obtained aqueous latex (L-9) was 0.20 µm.

### (Production Example 3-9: Production of powdery and/or granular material (P-9))

333 parts by weight of the obtained aqueous latex (L-9) and 2 parts by weight of Irganox 1135 were mixed. The obtained mixture was introduced into 600 parts by weight of ion-exchanged water having 4 parts by weight of calcium chloride dissolved therein and having a temperature adjusted to 70°C to agglutinate the fine polymer particles (A). Thereafter, the obtained mixture was filtered to obtain a wet powder. Further, an operation of introducing the obtained wet powder into 500 parts by weight of ion-exchanged water and an operation of filtering the wet powder introduced into the ion-exchanged water were repeated for a total of two cycles. Finally, the wet powder was dried in a dryer at 50°C for 48 hours to obtain a powdery and/or granular material (P-9) (noise reduction agent).

### [Example 10: Method for producing powdery and/or granular material (P-10)]

### (Production Example 2-10: Preparation of aqueous latex (L-10))

Into a glass reaction vessel were introduced 90 parts by mass of the polybutadiene rubber latex (R-3) obtained in Production Example 1-3 (containing 30 parts by mass of polybutadiene rubber particles) and 173 parts by mass of deionized water. Here, the glass reaction vessel was equipped with a thermometer, a stirrer, a reflux condenser, a nitrogen inlet, and a device for adding monomers. While gas in the glass reaction vessel was replaced with nitrogen, the introduced raw materials were stirred at 60°C. Next, 0.004 parts by mass of EDTA, 0.001 parts by mass of ferrous sulfate heptahydrate, and 0.2 parts by mass of SFS were added into the glass reaction vessel. Thereafter, a mixture of 36 parts by mass of styrene (St), 24 parts by mass of BA, and 0.04 parts by mass of CHP was continuously added into the glass reaction vessel over 85 minutes. After completion of the addition, 0.065 parts by mass of CHP was added into the glass reaction vessel, and stirring of the mixture in the glass reaction vessel was continued for another 1 hour to complete the polymerization. Thereafter, a mixture of 10 parts by mass of styrene (St) and 0.01 parts by mass of CHP was continuously added into the glass reaction vessel over 15 minutes. After completion of the addition, 0.065 parts by mass of CHP was added into the glass reaction vessel, and stirring of the mixture in the glass reaction vessel was continued for another 1 hour to complete the polymerization. By the above operation, a graft part grafted to the crosslinked core part was formed, and an aqueous latex (L-10) containing fine polymer particles (A) was obtained. Not less than 99% by weight of the monomer component had been polymerized. The volume-average particle size of the fine polymer particles (A) contained in the obtained aqueous latex (L-10) was 0.20 µm.

### (Production Example 3-10: Production of powdery and/or granular material (P-10))

333 parts by weight of the obtained aqueous latex (L-10) and 2 parts by weight of Irganox 1135 were mixed. The obtained mixture was introduced into 600 parts by weight of ion-exchanged water having 4 parts by weight of calcium chloride dissolved therein and having a temperature adjusted to 70°C to agglutinate the fine polymer particles (A). Thereafter, the obtained mixture was filtered to obtain a wet powder. Further, an operation of introducing the obtained wet powder into 500 parts by weight of ion-exchanged water and an operation of filtering the wet powder introduced into the ion-exchanged water were repeated for a total of two cycles. Finally, the wet powder was dried in a dryer at 50°C for 48 hours to obtain a powdery and/or granular material (P-10) (noise reduction agent).

### [Example 11: Method for producing powdery and/or granular material (P-11)]

### (Production Example 2-11: Preparation of aqueous latex (L-11))

Into a glass reaction vessel were introduced 90 parts by mass of the polybutadiene rubber latex (R-3) obtained in Production Example 1-3 (containing 30 parts by mass of polybutadiene rubber particles) and 173 parts by mass of deionized water. Here, the glass reaction vessel was equipped with a thermometer, a stirrer, a reflux condenser, a nitrogen inlet, and a device for adding monomers. While gas in the glass reaction vessel was replaced with nitrogen, the introduced raw materials were stirred at 60°C. Next, 0.004 parts by mass of EDTA, 0.001 parts by mass of ferrous sulfate heptahydrate, and 0.2 parts by mass of SFS were added into the glass reaction vessel. Thereafter, a mixture of 45 parts by mass of styrene (St), 15 parts by mass of BA, and 0.04 parts by mass of CHP was continuously added into the glass reaction vessel over 85 minutes. After completion of the addition, 0.065 parts by mass of CHP was added into the glass reaction vessel, and stirring of the mixture in the glass reaction vessel was continued for another 1 hour to complete the polymerization. Thereafter, a mixture of 10 parts by mass of styrene (St) and 0.01 parts by mass of CHP was continuously added into the glass reaction vessel over 15 minutes. After completion of the addition, 0.065 parts by mass of CHP was added into the glass reaction vessel, and stirring of the mixture in the glass reaction vessel was continued for another 1 hour to complete the polymerization. By the above operation, a graft part grafted to the crosslinked core part was formed, and an aqueous latex (L-11) containing fine polymer particles (A) was obtained. Not less than 99% by weight of the monomer component had been polymerized. The volume-average particle size of the fine polymer particles (A) contained in the obtained aqueous latex (L-11) was 0.20 µm.

### (Production Example 3-11: Production of powdery and/or granular material (P-11))

333 parts by weight of the obtained aqueous latex (L-11) and 2 parts by weight of Irganox 1135 were mixed. The obtained mixture was introduced into 600 parts by weight of ion-exchanged water having 4 parts by weight of calcium chloride dissolved therein and having a temperature adjusted to 70°C to agglutinate the fine polymer particles (A). Thereafter, the obtained mixture was filtered to obtain a wet powder. Further, an operation of introducing the obtained wet powder into 500 parts by weight of ion-exchanged water and an operation of filtering the wet powder introduced into the ion-exchanged water were repeated for a total of two cycles. Finally, the wet powder was dried in a dryer at 50°C for 48 hours to obtain a powdery and/or granular material (P-11) (noise reduction agent).

For the noise reduction agents obtained in Examples and Comparative Example and the resin compositions for a friction material respectively containing the noise reduction agents, the volume-average particle size of the fine polymer particles (A), the amounts of the core part and the shell part, the peak temperature and peak height of tan δ of the fine polymer particles (A), the pyrolytic property, and the peak height of tan δ of the resin composition for a friction material were measured by the methods described above. The measurement results are shown in Table 1. Note that Nippol 1411 (NBR) manufactured by Zeon Corporation was used as Comparative Example 1.

Further, a brake pad was produced by the method described above, and the noise reduction effect was evaluated. The evaluation results are shown in Table 1.

### [Table 1]

**(Table 1)**

| | | | | Example 1 | Example 2 | Example 3 | Example 4 |
|---|---|---|---|---|---|---|---|
| Type of powdery and/or granular material | | | | P-1 | P-2 | P-3 | P-4 |
| Type of polymer particles | | | | Core-shell polymer | Core-shell polymer | Core-shell polymer | Core-shell polymer |
| Polymer particles (A) | Volume-average particle size | | nm | 250 | 100 | 200 | 200 |
| Powdery and/or granular material (noise reduction agent) | Peak top of tan δ in the range of not lower than 0°C and not higher than 200°C | Peak temperature | °C | 112 | 100 | 108 | 109 |
| | | Peak height | - | 1.23 | 0.934 | 1.59 | 2.04 |
| | Pyrolytic property | 5% weight loss temperature | °C | 303 | 375 | 381 | 388 |
| Brake pad | Noise reduction effect | | - | 1 | 1 | 2 | 2 |

**(Table 1) (Cont.)**

| | | | | Example 5 | Example 6 | Example 7 | Example 8 |
|---|---|---|---|---|---|---|---|
| Type of powdery and/or granular material | | | | P-5 | P-6 | P-7 | P-8 |
| Type of polymer particles | | | | Core-shell polymer | Core-shell polymer | Core-shell polymer | Core-shell polymer |
| Polymer particles (A) | Volume-average particle size | | nm | 200 | 200 | 200 | 200 |
| Powdery and/or granular material (noise reduction agent) | Peak top of tan δ in the range of not lower than 0°C and not higher than 200°C | Peak temperature | °C | 109 | 100 | 31 | 17 |
| | | Peak height | - | 2.34 | 1.61 | 1.87 | 1.62 |
| | Pyrolytic property | 5% weight loss temperature | °C | 390 | 383 | 384 | 386 |
| Brake pad | Noise reduction effect | | - | 2 | 2 | 2 | 2 |

**(Table 1) (Cont.)**

| | | | | Example 9 | Example 10 | Example 11 | Comparative Example 1 |
|---|---|---|---|---|---|---|---|
| Type of powdery and/or granular material | | | | P-9 | P-10 | P-11 | - |
| Type of polymer particles | | | | Core-shell polymer | Core-shell polymer | Core-shell polymer | NBR |
| Polymer particles (A) | Volume-average particle size | | nm | 200 | 200 | 200 | - |
| Powdery and/or granular material (noise reduction agent) | Peak top of tan δ in the range of not lower than 0°C and not higher than 200°C | Peak temperature | °C | 37 | 53 | 72 | 0 |
| | | Peak height | - | 1.69 | 1.72 | 1.53 | 0.363 |
| | Pyrolytic property | 5% weight loss temperature | °C | 387 | 387 | 388 | 352 |
| Brake pad | Noise reduction effect | | - | 2 | 2 | 2 | 0 |

### Industrial Applicability

An embodiment of the present invention can provide a noise reduction agent for a resin composition for a friction material capable of reducing noise. Therefore, the noise reduction agent in accordance with an embodiment of the present invention can be particularly suitably utilized as a material for a friction material, an adhesive, a molded composite material, a laminate, and the like.

## Claims

1. A noise reduction agent comprising fine polymer particles (A), wherein:
the fine polymer particles (A) include a core part and a graft part grafted to the core part;
the noise reduction agent has a peak top of tan δ in a temperature region of not lower than 10°C; and
a maximum value of a peak height of tan δ in the temperature region of not lower than 10°C is not less than 0.70.

2. The noise reduction agent according to claim 1, wherein the core part contains at least one type selected from the group consisting of diene-based rubbers, (meth)acrylate-based rubbers, and organosiloxane-based rubbers.

3. The noise reduction agent according to claim 1, wherein the core part is at least one type selected from the group consisting of butadiene rubbers, butadiene-styrene rubbers, and butyl acrylate rubbers.

4. The noise reduction agent according to claim 1, wherein the graft part contains at least one type of structural unit selected from the group consisting of an aromatic vinyl unit, a vinyl cyanide unit, and a (meth)acrylate unit.

5. The noise reduction agent according to claim 1, wherein a proportion of the graft part in the fine polymer particles (A) is 20% by weight to 90% by weight in 100% by weight of the fine polymer particles (A).

6. The noise reduction agent according to claim 1, wherein:
the graft part contains at least one type of structural unit selected from the group consisting of an unsubstituted vinyl aromatic unit and a vinyl-substituted aromatic unit; and
a total amount of the unsubstituted vinyl aromatic unit and the vinyl-substituted aromatic unit in the graft part is more than 70% by weight and not more than 100% by weight in 100% by weight of the graft part.

7. The noise reduction agent according to claim 1, wherein a volume-average particle size of the fine polymer particles (A) is 0.10 µm to 10.00 µm.

8. A noise reduction agent comprising fine polymer particles (A), wherein:
the fine polymer particles (A) include a core part and a graft part grafted to the core part;
a proportion of the graft part in the fine polymer particles (A) is 20% by weight to 90% by weight in 100% by weight of the fine polymer particles (A);
the graft part contains at least one type of structural unit selected from the group consisting of an unsubstituted vinyl aromatic unit and a vinyl-substituted aromatic unit; and
a total amount of the unsubstituted vinyl aromatic unit and the vinyl-substituted aromatic unit in the graft part is more than 70% by weight and not more than 100% by weight in 100% by weight of the graft part.

9. The noise reduction agent according to claim 8, wherein the core part contains at least one type selected from the group consisting of diene-based rubbers, (meth)acrylate-based rubbers, and organosiloxane-based rubbers.

10. The noise reduction agent according to claim 8, wherein the core part is at least one type selected from the group consisting of butadiene rubbers, butadiene-styrene rubbers, and butyl acrylate rubbers.

11. A resin composition for a friction material, comprising the noise reduction agent according to claim 1 or 8.

12. The resin composition according to claim 11, further comprising a phenol-based resin.

13. A friction material comprising the resin composition according to claim 11.
